# EUROPEAN PATENT APPLICATION

(11) **EP 4 236 535 A1**
(43) Date of publication of application: **30.08.2023**
(21) Application number: 21882186.6
(22) Date of filing: 22.10.2021
(51) Int. Cl.: H04W 72/04

(54) **MESSAGE PROCESSING METHOD AND APPARATUS, TERMINAL DEVICE, NETWORK DEVICE AND STORAGE MEDIUM**

(30) Priority: 23.10.2020 CN 202011149236
(71) Applicant: Datang Mobile Communications Equipment Co., Ltd., Beijing 100085 (CN)
(72) Inventor: SONG, Lei, Beijing 100085 (CN); CHEN, Runhua, Beijing 100085 (CN); GAO, Qiubin, Beijing 100085 (CN)
(74) Representative: Studio Torta S.p.A.
(86) International application number: PCT/CN2021/125924
(87) International publication number: WO 2022/083774

(57) **Abstract**

The embodiments of the present application provide a method for processing a message and apparatus, a terminal device, a network device and a storage medium. The method comprises: transmitting a first signal to a network device, the first signal being used for indicating first index information of a link in which a beam failure occurs. By means of the present application, a terminal device can determine which link's serving beam a network device changes, thereby recovering the transmission of a single link in time when a beam failure occurs therein.

## Description

### CROSS-REFERENCE TO RELATED APPLICATION

The present application claims priority to Chinese Patent Application No. 202011149236.3, filed on October 23, 2020, entitled "Message Processing Method and Apparatus, Terminal Device, Network Device and Storage Medium", which is hereby incorporated by reference in its entirety.

### TECHNICAL FIELD

The present application relates to the field of communication technologies, in particular to methods and apparatuses for processing a message, a terminal device, a network device and a storage medium.

### BACKGROUND

In a New Radio (NR) system, physical channels and physical signals may improve the quality of data transmission through beamforming technology when using high frequency bands for transmission. A network-side device may concentrate a transmitted power in a certain direction (for example, the direction towards a terminal) to increase the power of a received signal through beamforming technology. However, when the link between the network-side device and the terminal is blocked, a received power of a terminal may be greatly reduced, which causes (beam) transmission failure events. The NR system defines a beam failure recovery mechanism, which is also referred to as a link recovery mechanism. In the link recovery mechanism, after the terminal detects a transmission failure event, the terminal reports it to the network-side device, and then the network-side device replaces a serving beam for the terminal to ensure a normal transmission.

In the NR system, the network-side device configures or predefines a set of beam failure detection reference signals (BFD RSs) for each serving cell for the terminal. The terminal transmits a beam failure recovery request to the network-side device when the received power for respective reference signals within the set is lower than a certain threshold. The terminal may carry a cell index information in a beam failure request. If the terminal identifies a new available beam, the related information of the new available beam may be included in the beam failure recovery request. The network-side device may notify the terminal in a specific search space that a new serving beam has been changed for the terminal after receiving the beam failure recovery request transmitted by the terminal.

When a cell includes a plurality of transmission reception points (TRPs) and the quality of a link between one of the TRPs and the terminal is poor, the terminal would not report beam failure events if the control channels of other TRPs may still work normally (that is, some RS measurements in the BFD RS set may be higher than a certain threshold). However, for transmission reception points having poor link quality, normal communication between them and the terminal cannot be guaranteed. The terminal may only initiate the beam failure recovery mechanism when the quality of the link between respective TRPs and the terminal deteriorates, or may perform normal communication until the quality of the link between the failed TRPs and the terminal is recovered. As such, a large transmission delay may be generated for data transmission on TRPs of which link quality is earlier deteriorated. In addition, although a plurality of TRPs may be configured to provide services for the terminal, the TRP is invisible to the terminal, and the TRP has no TRP index, which is different from the cell, so the existing cell beam failure mechanism cannot be directly extended to the TRP beam recovery mechanism. In addition, through the existing response mechanism of network-side device, the terminal is also unable to determine which TRP is to be recovered, and then the serving beam determined by the terminal is inconsistent with the serving beam actually used by the network-side device, thereby resulting in transmission failure.

### SUMMARY

The present application provides methods for processing a message, apparatuses for processing a message, terminal devices, network devices and a storage medium to solve the problem that in the related art, a new beam cannot be recovered in time for the TRP when the quality of a link between a TRP and the terminal is poor.

The following solutions are provided in the embodiments of the present application.

According to a first aspect of the present application, a method for processing a message is provided, which includes:
transmitting a first signal to a network device; where the first signal is for indicating first index information of a link in which a beam failure occurs.

In an embodiment, the first signal includes any one or more of the following information:
a beam failure detection reference signal (BFD RS) index corresponding to the link in which the beam failure occurs;
a beam failure detection reference signal (BFD RS) set index corresponding to the link in which the beam failure occurs;
a control resource set (CORESET) subset index corresponding to the link in which the beam failure occurs;
a CORESET index corresponding to the link in which the beam failure occurs;
a value of higher layer parameter CORESETPoolIndex of a CORESET, corresponding to the link in which the beam failure occurs; or
a beam failure recovery (BFR) procedure index corresponding to the link in which the beam failure occurs.

In an embodiment, the transmitting a first signal to a network device includes:
transmitting the first signal to the network device through one or more of a higher layer signaling, a media access control layer control element (MAC CE), a scheduling request (SR) resource, or a physical random access channel (PRACH).

In an embodiment, different links in which the beam failure occurs correspond to different SR resources in case that the first signal is transmitted through the SR resource.

In an embodiment, the different links in which the beam failure occurs correspond to different SR resources in case that the first signal is transmitted through the scheduling request (SR) resource includes:
an SR periodicity and offset indicates first index information in case that the first signal is transmitted through the SR resource.

In an embodiment, when using MAC CE to transmit the first signal, the method further includes at least one of the following:
indicating the first index information and/or a cell index through bitmap or a direct indication;
indicating the BFR procedure index, and not indicating the cell index;
indicating the cell index and up to n BFR procedure indexes in a cell;
indicating the bitmap of beam failure indication corresponding to all BFD RS sets in the cell; or
indicating the beam failure indication corresponding to one or more BFD RS sets.

In an embodiment, a transmission resource of the PRACH carries the first index information, or different transmission resources of the PRACH correspond to different first index information in case that the first signal is transmitted through the PRACH.

According to a second aspect of the present application, a method for processing a message is provided, which includes:
receiving a second signal transmitted by a network device; where the second signal is a signal transmitted by the network device after a beam failure recovery request signal for a link is received; and
determining a transmission configuration indication (TCI) state of a first physical channel and/or a power control parameter based on the second signal;
where the first physical channel is a channel corresponding to the link in which the beam failure occurs or a beam failure recovery request signal.

In an embodiment, the determining the transmission configuration indication state of the first physical channel based on the second signal includes:
determining the first physical channel corresponding to the second signal based on an association between a resource carrying the second signal and first index information of the link in which the beam failure occurs; and
determining the TCI state of the first physical channel.

In an embodiment, the second signal includes at least one of the following:
a resource for the second signal includes one or more of a search space or a control resource set (CORESET); where a resource corresponds to a link;
the second signal is a signal transmitted by one of two or more dedicated search spaces or CORESETs;
the second signal includes an information field for indicating the first index information; or
the second signal is downlink control information (DCI) having a toggled new data indicator (NDI) field and a same hybrid automatic retransmission request (HARQ) process number as a DCI scheduling a physical uplink shared channel (PUSCH) with a beam failure recovery request.

In an embodiment, in case that the first physical channel is a physical downlink control channel (PDCCH), a CORESET for transmission of a second signal and a CORESET for transmission of a first physical channel have the same CORESET higher layer parameter or are associated with the same first index information;
in case that the first physical channel is a physical uplink control channel (PUCCH), a CORESET for reception of the second signal and a CORESET on which the PDCCH indicating a first physical channel resource is transmitted have the same higher layer parameter of CORESET or are associated with the same first index information;
in case that the first physical channel is the physical uplink control channel (PUCCH), a CORESET for reception of the second signal and a first physical channel resource are associated with the same first index information; or
in case that the first physical channel is a physical uplink shared channel (PUSCH) or a physical downlink shared channel (PDSCH), a CORESET for reception of the second signal and a CORESET on which the PDCCH scheduling the first physical channel is transmitted have the same higher layer parameter of a CORESET or are associated with the same first index information.

In an embodiment, the network device configures an association between the first index information and at least one of the following information:
the first physical channel;
the first physical channel resource;
the CORESET; or
a TCI state or a quasi-colocation (QCL) parameter.

In an embodiment, the transmission configuration indication (TCI) state of the first physical channel and/or the power control parameter includes at least one of the following:
a TCI state or a quasi-colocation (QCL) parameter associated with the beam failure recovery request signal or the second signal or the first index information, or the power control parameter; or
a TCI state or a quasi-colocation (QCL) parameter of a reference signal carried by the beam failure recovery request signal or the power control parameter.

According to a third aspect of the present application, a method for processing a message is provided, which includes:
receiving a first signal transmitted by a terminal device; where the first signal is for indicating first index information of a link in which a beam failure occurs.

In an embodiment, the first signal includes any one or more of the following information:
a beam failure detection reference signal (BFD RS) index corresponding to the link in which the beam failure occurs;
a beam failure detection reference signal (BFD RS) set index corresponding to the link in which the beam failure occurs;
a control resource set (CORESET) subset index corresponding to the link in which the beam failure occurs;
a CORESET index corresponding to the link in which the beam failure occurs;
a value of higher layer parameter CORESETPoolIndex of a CORESET, corresponding to the link in which the beam failure occurs; or
a beam failure recovery (BFR) procedure index corresponding to the link in which the beam failure occurs.

According to a fourth aspect of the present application, a method for processing a message is provided, which includes:
transmitting a second signal to a terminal device for determining a transmission configuration indication (TCI) state of a first physical channel and/or a power control parameter based on the second signal; where the second signal is a signal transmitted by the network device after a beam failure recovery request signal for a link is received;
where the first physical channel is a channel corresponding to the link in which the beam failure occurs or a beam failure recovery request signal.

In an embodiment, the transmitting the second signal to the terminal device so that the terminal device determines the transmission configuration indication (TCI) state of the first physical channel and/or the power control parameter based on the second signal includes:
transmitting a second signal to the terminal device, so that the terminal device determines the first physical channel corresponding to the second signal based on an association between a resource carrying the second signal and first index information of the link in which the beam failure occurs, and determines a TCI state of the first physical channel.

In an embodiment, the second signal includes at least one of the following:
a resource for the second signal includes one or more of a search space or a control resource set (CORESET); where a resource corresponds to a link;
the second signal is a signal transmitted by one of two or more dedicated search spaces or CORESETs;
the second signal includes an information field for indicating the first index information; or the second signal is downlink control information (DCI) having a toggled new data indicator (NDI) field and a same hybrid automatic retransmission request (HARQ) process number as a DCI scheduling a physical uplink shared channel (PUSCH) with a beam failure recovery request.

According to a fifth aspect of the present application, a method for processing a message is provided, which includes:
determining a transmission configuration indication (TCI) state of a first physical channel and/or a power control parameter based on an association between a beam failure detection reference signal (BFD RS) set index corresponding to a link in which a beam failure occurs and the transmission configuration indication (TCI) state of the first physical channel;
where the first physical channel is a channel corresponding to the link in which the beam failure occurs or a beam failure recovery request signal.

In an embodiment, the first physical channel is associated with a value of higher layer parameter of a CORESET used to transmit the first physical channel.

In an embodiment, the first physical channel includes any one or more of the follows:
a physical downlink control channel (PDCCH), a physical uplink control channel (PUCCH), a physical uplink shared channel (PUSCH), a physical downlink shared channel (PDSCH), or a physical random access channel (PRACH).

In an embodiment, a transmission configuration indication (TCI) state of a first physical channel and/or a power control parameter includes at least one of the following:
a TCI state or a quasi-colocation (QCL) parameter associated with the beam failure recovery request signal or first index information, or the power control parameter; or
a TCI state or a quasi-colocation (QCL) parameter of a reference signal carried by the beam failure recovery request signal or the power control parameter;
where the first index information is index information of the link in which a beam failure occurs.

According to a sixth aspect of the present application, an apparatus for processing a message is provided, which includes:
a first transmitting module, configured to transmit a first signal to a network device; where the first signal is for indicating first index information of a link in which a beam failure occurs.

According to a seventh aspect of the present application, an apparatus for processing a message is provided, which includes:
a first receiving module, configured to receive a second signal transmitted by a network device; where the second signal is a signal transmitted by the network device after a beam failure recovery request signal for a link is received; and
a first determining module, configured to determine a transmission configuration indication (TCI) state of a first physical channel and/or a power control parameter based on the second signal;
where the first physical channel is a channel corresponding to the link in which the beam failure occurs or a beam failure recovery request signal.

According to an eighth aspect of the present application, an apparatus for processing a message is provided, which includes:
a second receiving module, configured to receive a first signal transmitted by a terminal device;
wherein the first signal is for indicating first index information of a link in which a beam failure occurs.

According to a ninth aspect of the present application, an apparatus for processing a message is provided, which includes:
a second transmitting module, configured to transmit a second signal to a terminal device, so that the terminal device determines a transmission configuration indication (TCI) state of a first physical channel and/or a power control parameter based on the second signal; where the second signal is a signal transmitted by the network device after a beam failure recovery request signal for a link is received;
where the first physical channel is a channel corresponding to the link in which the beam failure occurs or a beam failure recovery request signal.

According to a tenth aspect of the present application, an apparatus for processing a message is provided, which includes:
a second determining module, configured to determine a transmission configuration indication (TCI) state of a first physical channel and/or a power control parameter based on an association between a beam failure detection reference signal (BFD RS) set index corresponding to a link in which a beam failure occurs and the transmission configuration indication (TCI) state of the first physical channel;
where the first physical channel is a channel corresponding to the link in which the beam failure occurs or a beam failure recovery request signal.

According to an eleventh aspect of the present application, a terminal device is provided, which includes a processor and a memory storing a computer program that is executable by the processor, where the computer program, when executed by the processor, causes the terminal device to perform the following step:
transmitting a first signal to a network device; wherein the first signal is for indicating first index information of a link in which a beam failure occurs.

In an embodiment, the first signal includes any one or more of the following information:
a beam failure detection reference signal (BFD RS) index corresponding to the link in which the beam failure occurs;
a beam failure detection reference signal (BFD RS) set index corresponding to the link in which the beam failure occurs;
a control resource set (CORESET) subset index corresponding to the link in which the beam failure occurs;
a CORESET index corresponding to the link in which the beam failure occurs;
a value of higher layer parameter CORESETPoolIndex of a CORESET, corresponding to the link in which the beam failure occurs; or
a beam failure recovery (BFR) procedure index corresponding to the link in which the beam failure occurs.

In an embodiment, the transmitting a first signal to a network device includes:
transmitting the first signal to the network device through one or more of a higher layer signaling, a media access control layer control element (MAC CE), a scheduling request (SR) resource, or a physical random access channel (PRACH).

In an embodiment, different links in which the beam failure occurs correspond to different SR resources when the first signal is transmitted through the scheduling request (SR) resource.

In an embodiment, the different links in which the beam failure occurs correspond to different SR resources when the first signal is transmitted through the SR resource, which includes:
an SR periodicity and offset indicates first index information in case that the first signal is transmitted through the SR resource.

In an embodiment, in case that the first signal is transmitted through the MAC CE, the steps further includes at least one of the following:
indicating the first index information and/or a cell index through bitmap or a direct indication;
indicating the BFR procedure index, and not indicating the cell index;
indicating the cell index and up to n BFR procedure indexes in a cell;
indicating the bitmap of beam failure indication corresponding to all BFD RS sets in the cell; or
indicating the beam failure indication corresponding to one or more BFD RS sets.

In an embodiment, a transmission resource of the PRACH carries the first index information, or different transmission resources of the PRACH correspond to different first index information in case that the first signal is transmitted through the PRACH.

According to a twelfth aspect of the present application, a terminal device is provided, which includes a processor and a memory storing a computer program that is executable by the processor, where the computer program, when executed by the processor, causes the terminal device to perform the following steps:
receiving a second signal transmitted by a network device; wherein the second signal is a signal transmitted by the network device after a beam failure recovery request signal for a link is received; and
determining a transmission configuration indication (TCI) state of a first physical channel and/or a power control parameter based on the second signal;
where the first physical channel is a channel corresponding to the link in which the beam failure occurs or a beam failure recovery request signal.

In an embodiment, the determining the transmission configuration indication state of the first physical channel based on the second signal includes:
determining the first physical channel corresponding to the second signal based on an association between a resource carrying the second signal and first index information of the link in which the beam failure occurs; and
determining the TCI state of the first physical channel.

In an embodiment, the second signal includes at least one of the following:
a resource for the second signal includes one or more of a search space or a control resource set (CORESET); wherein a resource corresponds to a link;
the second signal is a signal transmitted by one of two or more dedicated search spaces or CORESETs;
the second signal includes an information field for indicating the first index information; or
the second signal is downlink control information (DCI) having a toggled new data indicator (NDI) field and a same hybrid automatic retransmission request (HARQ) process number as a DCI scheduling a physical uplink shared channel (PUSCH) with a beam failure recovery request.

In an embodiment, in case that the first physical channel is a physical downlink control channel (PDCCH), a CORESET for transmission of a second signal and a CORESET for transmission of a first physical channel have the same higher layer parameter of a CORESET or are associated with the same first index information;
in case that the first physical channel is a physical uplink control channel (PUCCH), a CORESET for reception of the second signal and a CORESET on which the PDCCH indicating a first physical channel resource is transmitted have the same higher layer parameter of a CORESET or are associated with the same first index information;
in case that the first physical channel is the physical uplink control channel (PUCCH), a CORESET for reception of the second signal and a first physical channel resource are associated with the same first index information; or
in case that the first physical channel is a physical uplink shared channel (PUSCH) or a physical downlink shared channel (PDSCH), a CORESET for reception of the second signal and a CORESET on which the PDCCH scheduling the first physical channel is transmitted have the same higher layer parameter of a CORESET or are associated with the same first index information.

In an embodiment, the network device configures an association between the first index information and at least one of the following information:
the first physical channel;
the first physical channel resource;
the CORESET; or
a TCI state or a quasi-colocation (QCL) parameter.

In an embodiment, the transmission configuration indication (TCI) state of the first physical channel and/or the power control parameter includes at least one of the follows:
a TCI state or a quasi-colocation (QCL) parameter associated with the beam failure recovery request signal or the second signal or the first index information, or the power control parameter; or
a TCI state or a quasi-colocation (QCL) parameter of a reference signal carried by the beam failure recovery request signal or the power control parameter.

According to a thirteenth aspect of the present application, a network device is provided, which includes a processor and a memory storing a computer program that is executable by the processor, where the computer program, when executed by the processor, causes the network device to perform the following step:
receiving a first signal transmitted by a terminal device; wherein the first signal is for indicating first index information of a link in which a beam failure occurs.

In an embodiment, the first signal includes any one or more of the following information:
a beam failure detection reference signal (BFD RS) index corresponding to the link in which the beam failure occurs;
a beam failure detection reference signal (BFD RS) set index corresponding to the link in which the beam failure occurs;
a control resource set (CORESET) subset index corresponding to the link in which the beam failure occurs;
a CORESET index corresponding to the link in which the beam failure occurs;
a value of higher layer parameter CORESETPoolIndex of a CORESET, corresponding to the link in which the beam failure occurs; or
a beam failure recovery (BFR) procedure index corresponding to the link in which the beam failure occurs.

According to a fourteenth aspect of the present application, a network device is provided, which includes a processor and a memory storing a computer program that is executable by the processor, where the computer program, when executed by the processor, causes the network device to perform the following step:
transmitting a second signal to a terminal device for determining a transmission configuration indication (TCI) state of a first physical channel and/or a power control parameter based on the second signal; wherein the second signal is a signal transmitted by the network device after a beam failure recovery request signal for a link is received;
where the first physical channel is a channel corresponding to the link in which the beam failure occurs or a beam failure recovery request signal.

In an embodiment, the transmitting the second signal to the terminal device so that the terminal device determines the transmission configuration indication (TCI) state of the first physical channel and/or the power control parameter based on the second signal includes:
transmitting a second signal to the terminal device, so that the terminal device determines the first physical channel corresponding to the second signal based on an association between a resource carrying the second signal and first index information of the link in which the beam failure occurs, and determines a TCI state of the first physical channel.

In an embodiment, the second signal includes at least one of the following:
a resource for the second signal includes one or more of a search space or a control resource set (CORESET); wherein a resource corresponds to a link;
the second signal is a signal transmitted by one of two or more dedicated search spaces or CORESETs;
the second signal includes an information field for indicating the first index information; or
the second signal is downlink control information (DCI) having a toggled new data indicator (NDI) field and a same hybrid automatic retransmission request (HARQ) process number as a DCI scheduling a physical uplink shared channel (PUSCH) with a beam failure recovery request.

According to a fifteenth aspect of the present application, a terminal device is provided, which includes a processor and a memory storing a computer program that is executable by the processor, where the computer program, when executed by the processor, causes the terminal device to perform the following step:
determining a transmission configuration indication (TCI) state of a first physical channel and/or a power control parameter based on an association between a beam failure detection reference signal (BFD RS) index corresponding to a link in which a beam failure occurs and the transmission configuration indication (TCI) state of the first physical channel;
where the first physical channel is a channel corresponding to the link in which the beam failure occurs or a beam failure recovery request signal.

In an embodiment, the first physical channel is associated with a value of higher layer parameter of a CORESET used to transmit the first physical channel.

In an embodiment, the first physical channel includes any one or more of the following:
a PDCCH, a PUCCH, a PUSCH, a PDSCH, or a PRACH.

In an embodiment, a transmission configuration indication (TCI) state of a first physical channel and/or a power control parameter includes at least one of the following:
a TCI state or a quasi-colocation (QCL) parameter associated with the beam failure recovery request signal or first index information, or the power control parameter; or
a TCI state or a quasi-colocation (QCL) parameter of a reference signal carried by the beam failure recovery request signal or the power control parameter;
where the first index information is index information of the link in which a beam failure occurs.

According to a sixteenth aspect of the present application, a processor readable storage medium having computer program stored therein is provided, where the computer program, when executed by a processor, causes the processor to perform the steps of the method for processing the message of the first aspect or the second aspect or the third aspect or the fourth aspect or the fifth aspect.

The embodiments of the present application provide the methods and apparatuses for processing the message, terminal device, network device and storage medium. The method for processing the message includes: receiving a second signal transmitted by a network device, where the second signal is a signal transmitted by the network device after a beam failure recovery request signal for a link is received; and determining a transmission configuration indication (TCI) state of a first physical channel and/or a power control parameter based on the second signal, where the first physical channel is a channel corresponding to the link in which the beam failure occurs or a beam failure recovery request signal. The methods for processing the message provided by the embodiments of the present application enable the terminal device to determine the link (e.g., TRP) of which the serving beam is replaced by the network device, and then timely recovers the transmission of a single link (TRP) in which a beam failure occurs.

### BRIEF DESCRIPTION OF DRAWINGS

In order to more clearly illustrate the solutions according to the present application, the accompanying drawings used in the description of the embodiments of the present application are briefly described below. It should be noted that the drawings in the following description are only part embodiments of the present application. For those of ordinary skill in the art, other drawings can be obtained according to these drawings without creative efforts.
FIG. 1 is a flowchart diagram of a method for processing a message performed by a terminal device according to an embodiment of the present application.
FIG. 2 is a flowchart diagram of another method for processing a message performed by a terminal device according to an embodiment of the present application.
FIG. 3 is a flowchart diagram of a method for processing a message performed by a network device according to an embodiment of the present application.
FIG. 4 is a flowchart diagram of another method for processing a message performed by a network device according to an embodiment of the present application.
FIG. 5 is a SCell BFR MAC CE signaling schematic diagram according to an embodiment of the present application.
FIG. 6 is a schematic diagram of adding a TRP index for each cell based on each cell bitmap index according to an embodiment of the present application.
FIG. 7 is a schematic diagram of indicating a failed cell and/or a TRP index to a network device through a signaling according to an embodiment of the present application.
FIG. 8 is a schematic diagram of indicating a BFR procedure through a bitmap in MAC CE signaling according to an embodiment of the present application.
FIG. 9 is a block diagram of an apparatus for processing a message applied to a terminal device according to an embodiment of the present application.
FIG. 10 is a block diagram of another apparatus for processing a message applied to a terminal device according to an embodiment of the present application.
FIG. 11 is a block diagram of an apparatus for processing a message applied to a network device according to an embodiment of the present application.
FIG. 12 is a block diagram of another apparatus for processing a message applied to a network device according to an embodiment of the present application.
FIG. 13 is a structural schematic diagram of a terminal device according to an embodiment of the present application.
FIG. 14 is a structural schematic diagram of another terminal device according to an embodiment of the present application.
FIG. 15 is a structural schematic diagram of a network device according to an embodiment of the present application.
FIG. 16 is a structural schematic diagram of another network device according to an embodiment of the present application.
FIG. 17 is a flowchart diagram of another method for processing a message performed by a terminal device according to an embodiment of the present application.
FIG. 18 is a block diagram of another apparatus for processing a message applied to a terminal device according to an embodiment of the present application.
FIG. 19 is a structural schematic diagram of another terminal device according to an embodiment of the present application.

### DETAILED DESCRIPTION OF THE EMBODIMENTS

The solutions of the embodiments of the present application are clearly described in combination with the accompanying drawings of the embodiments of the present application. The embodiments in the following description are only a part of the embodiments of the present application, rather than all the embodiments. Based on the embodiments of the present application, all other embodiments obtained by those of ordinary skill in the related art without creative efforts fall within the scope of the protection of the present application.

As described in the background, in a New Radio (NR) system, physical channels and physical signals may improve the quality of data transmission through beamforming technology when using high frequency bands for transmission. A network-side device may concentrate a transmitted power in a certain direction, for example, the direction towards a terminal, to increase the power of a received signal through beamforming technology. However, when the link between the network-side device and the terminal is blocked, a received power of a terminal may be greatly reduced, which causes (beam) transmission failure events. The NR system defines a beam failure recovery mechanism, that is a link recovery mechanism. In the link recovery mechanism, the terminal reports a transmission failure event to the network-side device after detecting the transmission failure event, and then the network-side device replaces a serving beam for the terminal to ensure a normal transmission.

In the NR system, the network-side device configures or predefines a set of beam failure detection reference signal (BFD RS) for each serving cell for the terminal. The terminal transmits a beam failure recovery request to the network-side device when the received power of all reference signals within the set is lower than a certain threshold. The terminal may carry a cell index information in a beam failure request. If the terminal identifies a new available beam, the related information of the new available beam may be included in the beam failure recovery request. The network-side device may notify the terminal in a dedicated search space that a new serving beam has been changed for the terminal after receiving the beam failure recovery request transmitted by the terminal.

When a cell includes a plurality of transmission reception points (TRPs) and the quality of a link between one of the TRPs and the terminal is poor, the terminal will not report beam failure events if the control channels of other TRPs may still work normally, that is, some RS measurements in the BFD RS set may be higher than a certain threshold. However, for transmission reception points with poor link quality, normal communication between them and the terminal cannot be guaranteed. The terminal may only initiate the beam failure recovery mechanism when the quality of the link between respective TRPs and the terminal deteriorates, or may perform normal communication until the quality of the link between the failed TRPs and the terminal is recovered. As such, a large transmission delay may be generated for data transmission on TRPs of which link quality is earlier deteriorated. In addition, although a plurality of TRPs may be configured to provide services for the terminal, the TRP is invisible to the terminal, and the TRP has no TRP index, which is different from the cell, so the cell beam failure mechanism in related art cannot be directly extended to the TRP beam recovery mechanism. In addition, following the network device-side response mechanism in related art may also make the terminal unable to determine which TRP is to be recovered, and then the serving beam determined by the terminal is inconsistent with the serving beam actually used on the network-side device, resulting in transmission failure. Based on the above, the embodiments of the present application provide a beam failure recovery report and response method based on a single transmission reception point TRP, so that the network-side device and the terminal determine the specific information of the TRP in which a transmission failure occurs, and a corresponding relation between a TRP to be recovered and the new candidate beam. In the present application, a beam failure can also be a transmission failure, a link failure between a TRP and a terminal, etc. In the following descriptions, a plurality of descriptions of a failure and their meanings may be replaced with each other.

The present application provides a reporting and response method supporting transmission reception point transmission failure for the problem that a terminal cannot report in time when a transmission failure occurs in a channel corresponding to a single transmission reception point, and the network-side device cannot replace a serving beam for the single transmission reception point in time. The terminal carries TRP-related index values in transmissions such as media access control, control element (MAC CE), physical uplink control channel (PUCCH), and physical random access channel (PRACH), and receives a recovery response of the TRP on the TRP-related physical resources. Therefore, the network-side device and the terminal have a same understanding of a TRP to be recovered, thereby avoiding mismatching between the TRP and a new serving beam. The methods and apparatuses for processing the message, terminal devices, network devices and storage medium provided by the present application are described in detail in the specific embodiments.

It should be noted that in the following descriptions, since the method and the device are conceived based on the same application, the principles of the method and the device are similar with each other, the implementation of the device and the method may be referred to each other, and the same part is not repeated in the present application.

In addition, it should be noted that the solution provided in the present application may be applied to a variety of systems, especially 5G system. For example, the applicable systems may be global system of mobile communication (GSM) system, code division multiple access (CDMA) system, wideband code division multiple access (WCDMA) general packet radio service (GPRS) system, long term evolution (LTE) system, LTE frequency division duplex (FDD) system, LTE time division duplex (TDD) system, long term evolution advanced (LTE-A) system, universal mobile telecommunication system (UMTS), worldwide interoperability for microwave access (WiMAX) system, 5G new radio (NR) system, etc. These systems include terminal devices and network devices. These systems can also include core network parts, such as evolved packet system (EPS), 5G system (5GS), etc.

The terminal device according to the embodiments of the present application may be a device that provides voice and/or data connectivity to a user, a handheld device with wireless connection, or other processing device communicated with a wireless modem. In different systems, the names of terminal devices may also be different. For example, in 5G systems, a terminal device may be called a User Equipment (UE). Wireless terminal devices may be communicated with one or more core networks (CNs) through a radio access network (RAN), and the wireless terminal devices may be mobile terminal devices, such as mobile phones, also referred to as "cellular" phones, and computers with mobile terminal devices. For example, the mobile terminal devices may be portable, pocket-sized, handheld, computer-built or vehicle-mounted mobile devices that exchange language and/or data with wireless access networks. For example, personal communication service (PCS) telephone, cordless telephone, session initiated protocol (SIP) telephone, wireless local loop (WLL) station, personal digital assistant (PDA) and other devices. A wireless terminal device can also be called a system, a subscriber unit, a subscriber station, a mobile station, a mobile, a remote station, an access point, a remote terminal, an access terminal, a user terminal, a user agent and a user device, which are not limited in the embodiments of the present application. Since the terminal device together with other network device, such as a core network device, an access network device (i.e. base station), constitutes a network that supports communication, in this application, the terminal device is also regarded as a network device.

The network device according to the embodiments of the present application may be a base station, which may include a plurality of cells serving the terminal, or a central unit (CU) or a distributed unit (DU). According to the specific different application situations, the network device can also be referred to as an access point, or may be a device in an air interface of an access network and communicated with a wireless terminal device through one or more sectors, or may be other names. The network device may be configured to exchange a received air frame with an Internet protocol (IP) group as a router between the wireless terminal device and the rest part of the access network, where the rest part of the access network may include an Internet protocol (IP) communication network. The Network devices can also coordinate an attribute management of the air interface. For example, the network device according to the embodiments of the present application may be a global system for mobile communications (GSM), a base transceiver station (BTS) in code division multiple access (CDMA), a network device (NodeB) in wide-band code division multiple access (WCDMA), an evolutional network device (eNB or e-NodeB) in a long term evolution (LTE) system, a 5G base station (gNB) in the next generation system, a home evolved Node B (HeNB), a relay node, a femto, or a pico, etc., which is not limited in the present application. In some network structures, a network device may include a centralized unit (CU) node and a distributed unit (DU) node, and the centralized unit and the distributed unit may also be geographically separated.

In addition, it should be noted that the term "and/or" in the embodiments of the present application describes three situations of the related objects. For example, A and/or B may represent three situations: only A, A and B together, and only B. The character "/" generally represents that the two objects on two sides of "/" have a relationship of "or".

The "an embodiment" or "one embodiment" mentioned throughout the present specification means that the specific features, structures or characteristics related to the embodiment are included in at least one embodiment of the present application. Therefore, "in an embodiment" or "in one embodiment" appearing throughout the present specification may not necessarily refer to the same embodiment. In addition, these specific features, structures, or characteristics may be combined in one or more embodiments in any appropriate manner.

The following are the illustrative description for the present application.

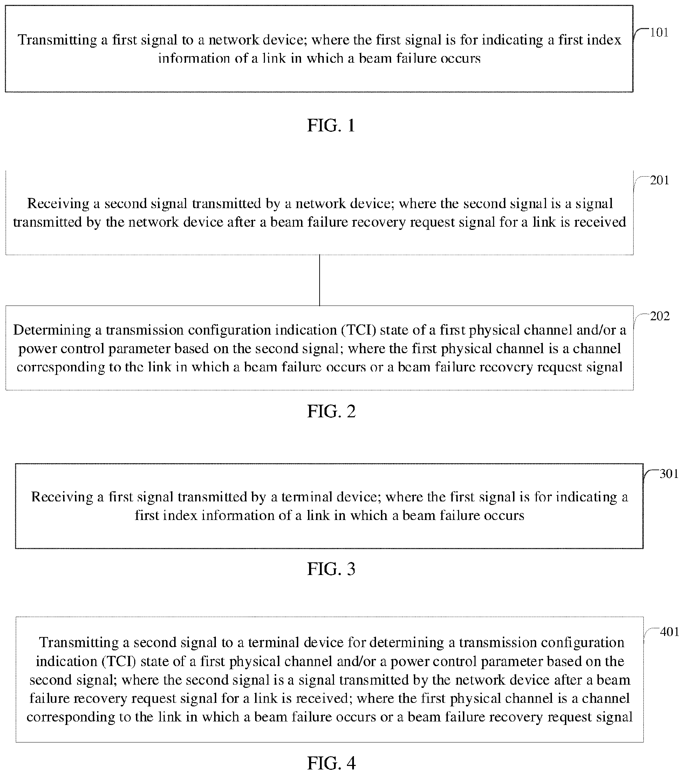

Referring to FIG. 1, it is a flowchart diagram of a method for processing a message performed by a terminal device according to an embodiment of the present application, the method includes the following steps.

Step 101: a first signal is transmitted to a network device; where the first signal is for indicating first index information of a link in which a beam failure occurs.

In the present application, the terminal device transmits the first signal, that is a beam failure recovery request signal, to the network device to indicate that a measured value of one or more reference signals or reference signal sets of the network device satisfies a certain threshold. For example, the channel quality is poor if the block error rate (BLER) of PDCCH is greater than the certain threshold value, such as 10 %.

In the present application, the first signal carries at least one of the following information, also referred to as a first index, or a TRP-related index:
a beam failure detection reference signal (BFD RS) index corresponding to the link in which a beam failure occurs;
a beam failure detection reference signal BFD RS set index corresponding to the link in which a beam failure occurs;
a control resource set CORESET subset index corresponding to the link in which a beam failure occurs;
a CORESET index corresponding to the link in which a beam failure occurs;
a value of higher layer parameter CORESETPoolIndex of a CORESET, corresponding to the link in which the beam failure occurs; or
a beam failure recovery BFR procedure index corresponding to the link in which a beam failure occurs.

In the present application, it should be noted that a MAC CE signaling carries a BFR procedure index or a CORESET subset index or a BFD RS index or a BFD RS set index when the first signal is the MAC CE signaling.

In an embodiment, the MAC CE signaling may also include an index of failed cell and a new beam index.

In an embodiment, the MAC CE signaling may indicate the first index information and/or a cell index through a bitmap or a direct indication.

In an embodiment, the MAC CE signaling may indicate only the BFR procedure index, and not indicate the cell index.

In an embodiment, the MAC CE signaling may indicate the cell index and at most N BFR procedure indexes in a cell.

In an embodiment, the MAC CE signaling may indicate the bitmap of a beam failure indication corresponding to all BFD RS sets in the cell and/or the beam failure indication corresponding to some BFD RS sets.

In an embodiment, an SR periodicity and offset indicates a BFR procedure index or a CORESET subset index or a BFD RS index or a BFD RS set index when the first signal is a SR resource.

In an embodiment, a transmission resource indicates a BFR procedure index or a CORESET subset index or a BFD RS index or a BFD RS set index when the first signal is a physical random access channel (PRACH).

According to the method for processing the message provided by the embodiments of the present application, the terminal device transmits the first signal to the network device, and the first signal is for indicating first index information of a link in which a beam failure occurs. Thus, the network device may be informed the link in which a beam failure occurs, which enables the terminal device to determine the link (TRP) of which the serving beam is replaced by the network device, and then timely recovers the transmission of a single link (TRP) in which a beam failure occurs.

Based on the above embodiments, the first signal includes any one or more of the following information:
a beam failure detection reference signal (BFD RS) index corresponding to the link in which a beam failure occurs;
a beam failure detection reference signal BFD RS set index corresponding to the link in which a beam failure occurs;
a control resource set CORESET subset index corresponding to the link in which a beam failure occurs;
a CORESET index corresponding to the link in which a beam failure occurs;
a value of higher layer parameter CORESETPoolIndex of a CORESET, corresponding to the link in which the beam failure occurs; or
a beam failure recovery BFR procedure index corresponding to the link in which a beam failure occurs.

Based on the above embodiments, in the present embodiment, transmitting a first signal to a network device includes:
transmitting the first signal to the network device through one or more of a higher layer signaling, a media access control layer control element (MAC CE), a scheduling request (SR) resource, a physical random access channel (PRACH).

Based on the above embodiments, in the present embodiment, different links in which the beam failure occurs correspond to different SR resources when the scheduling request (SR) resource is configured to transmit the first signal.

Based on the above embodiments, in the present embodiment, the different links in which the beam failure occurs correspond to different (SR) resources when the scheduling request (SR) resource is configured to transmit the first signal includes:
an SR periodicity and offset indicates one first index information when the scheduling request (SR) resource is configured to transmit the first signal.

Based on the above embodiments, in the present embodiment, when using MAC CE to transmit the first signal, it further includes at least one of the following methods: indicating the first index information and/or a cell index through a bitmap or a direct indication:
indicating the BFR procedure index, and not indicating the cell index;
indicating the cell index and at most N BFR procedure indexes in a cell;
indicating the bitmap of a beam failure indication corresponding to all BFD RS sets in the cell; or
indicating the beam failure indication corresponding to one or more BFD RS sets.

Based on the above embodiments, in the present embodiment, a transmission resource of the PRACH carries the first index information, or different transmission resources of the PRACH correspond to different first index information when PRACH is configured to transmit the first signal.

In the above embodiments, it should be noted that in order to support the TRP beam failure recovery, the network-side device can configure a variety of SR resources for the terminal, and different SR resources have different periodicities and offsets.

For example, the network device configures two kinds of SR resources for the terminal, and each SR resource corresponds to a different TRP index. The network device can determine the cell or TRP in which a failure occurs through the SR resources together with the MAC CE signaling transmitted by the terminal. For example, the network-side device determines the cell or TRP in which a failure occurs through the SR resources and the MAC CE signaling when the SR resources carry TRP-related index information and the MAC CE signaling carries cell ID-related information.

SR resources may also be configured to carry some group information, and the MAC CE signaling is configured to carry intra-group information. For example, all BFR procedures are divided into three large groups, and the SR resources carry group number information, and the MAC CE carries intra-group BFR procedure number. Thus, the overhead of the MAC CE signaling may be reduced. Specific grouping methods of the BFR procedures are not limited in the present embodiment.

Similarly, the TRP-related index information may also be carried in a PRACH transmission. For example, the resources transmitted by a preamble are related to the TRP-related index information of a first embodiment mentioned as follow, and the network device may determine TRP in which a failure occurs according to the resources used in the PRACH transmission.

Referring to FIG. 2, which is a flowchart diagram of another method for processing a message performed by a terminal device according to an embodiment of the present application, the method for processing the message includes the following steps:
step 201: a second signal transmitted by a network device is received; where the second signal is a signal transmitted by the network device after a beam failure recovery request signal for a link is received; and
step 202: a transmission configuration indication (TCI) state of a first physical channel and/or a power control parameter are determined based on the second signal;
where the first physical channel is a channel corresponding to the link in which the beam failure occurs or a beam failure recovery request signal.

In the present embodiment, the terminal receives the second signal, that is a response signal transmitted to the terminal after the network side receives a beam failure recovery request, transmitted by the network-side device, and determines a transmission configuration indication (TCI) state of the first physical channel associated with the second signal.

In the present embodiment, the second signal is associated with the first physical channel or a first reference signal with respect to at least one of the following indexes: a BFD RS index, a BFD RS set index, a CORESET subset index, a CORESET index, a value of higher layer parameter of a CORESET , or a BFR procedure index.

In the present embodiment, the TCI state of the first physical channel is at least one of:
the TCI state or a quasi-colocation (QCL) parameter associated with the first signal or the second signal or a related index value, that is, the information carried by the first signal; or
the TCI state or the quasi-colocation (QCL) parameter of the first reference signal carried in the first signal.

In the present embodiment, the CORESET configured to receive a physical downlink control channel (PDCCH) transmission of the second signal has the same first index as the CORESET configured to schedule or indicate the PDCCH transmission of the first physical channel or the CORESET used for transmission of a first physical channel.

The CORESET for transmission of a second signal and the CORESET for transmission of the first physical channel have the same CORESET correlation index when the first physical channel is the PDCCH.

The CORESET for reception of the second signal and the CORESET on which the PDCCH indicating a first physical channel resource is transmitted have the same CORESET correlation index when the first physical channel is a physical uplink control channel (PUCCH).

The CORESET for reception of the second signal and the CORESET on which the PDCCH scheduling the first physical channel is transmitted have the same CORESET correlation index when the first physical channel is a physical uplink shared channel (PUSCH) or a physical downlink shared channel (PDSCH).

In the present embodiment, the second signal may be at least one of:
downlink control information (DCI) having a toggled new data indicator (NDI) field and a same hybrid automatic retransmission request (HARQ) process number as a DCI scheduling a physical uplink shared channel (PUSCH) with a beam failure recovery request;
DCI received in two or more CORESETs or search spaces configured by the network-side device for the terminal and used for reception of the second signal; or
a DCI containing a failure index.

The embodiments of the present application provide the method for processing a message, which includes: receiving a second signal transmitted by a network device, where the second signal is a signal transmitted by the network device after a beam failure recovery request signal for a link is received; and determining a transmission configuration indication (TCI) state of a first physical channel and/or a power control parameter based on the second signal, where the first physical channel is a channel corresponding to the link in which the beam failure occurs or a beam failure recovery request signal, the method for processing a message provided by the embodiments of the present application enables the terminal device to determine the link (TRP) of which the serving beam is replaced by the network device, and then timely recovers the transmission of a single link (TRP) in which a beam failure occurs.

Based on the above embodiments, in the present embodiment, determining a transmission configuration indication state of a first physical channel based on the second signal includes:
determining the first physical channel corresponding to the second signal based on an association between a resource carrying the second signal and first index information of the link in which a beam failure occurs; and
determining the TCI state of the first physical channel.

Based on the above embodiments, in the present embodiment, the second signal includes at least one of the following:
a resource for the second signal includes one or more of a search space or a control resource set (CORESET); where, a resource corresponds to a link;
the second signal is a signal transmitted by one of two or more dedicated search spaces or CORESETs;
the second signal includes an information field for indicating the first index information; or
the second signal is downlink control information (DCI) having a toggled new data indicator (NDI) field and a same hybrid automatic retransmission request (HARQ) process number as a DCI scheduling a physical uplink shared channel (PUSCH) with a beam failure recovery request.

Based on the above embodiments, in the present embodiment, a CORESET for transmission of a second signal and a CORESET for transmission of a first physical channel have the same value of the higher layer parameter of CORESET or are associated with the same first index information when the first physical channel is a physical downlink control channel PDCCH;
a CORESET for reception of the second signal and a CORESET on which the PDCCH indicating a first physical channel resource is transmitted have the same higher layer parameter of a CORESET or are associated with the same first index information when the first physical channel is a physical uplink control channel (PUCCH);
a CORESET for reception of the second signal and a first physical channel resource are associated with the same first index information when the first physical channel is the physical uplink control channel (PUCCH); or.
a CORESET for reception of the second signal and a CORESET on which the PDCCH scheduling the first physical channel is transmitted have the same higher layer parameter of a CORESET or are associated with the same first index information when the first physical channel is a physical uplink shared channel (PUSCH) or a physical downlink shared channel (PDSCH).

Based on the above embodiments, in the present embodiment, the network device configures an association between the first index information and at least one of the following information:
the first physical channel;
the first physical channel resource;
the CORESET; or
a TCI state or a quasi-colocation (QCL) parameter.

Based on the above embodiments, in the present embodiment, the transmission configuration indication (TCI) state of the first physical channel and/or the power control parameter is at least one of the follows:
a TCI state or a quasi-colocation (QCL) parameter associated with the beam failure recovery request signal or the second signal or the first index information, or the power control parameter; or
a TCI state or a quasi-colocation (QCL) parameter of a reference signal carried by the beam failure recovery request signal or the power control parameter.

In addition, another embodiment of the present application further provides a method for processing a message, which includes the following steps:
step a: transmitting a first to a network device;
step b: receiving a second signal transmitted by a network device; where the second signal is a signal transmitted by the network device after receiving a beam failure recovery request signal (that is, the first signal) of a terminal device for a link;
step c: determining a transmission configuration indication (TCI) state of a first physical channel and/or a power control parameter based on the second signal; where the first physical channel is a channel corresponding to the link in which the beam failure occurs or a beam failure recovery request signal.

Some detailed descriptions of the present embodiment may be referred to the above two embodiments, which are not repeated in the present embodiment.

The embodiments of the present application provide the method for processing a message, which includes: receiving a second signal transmitted by a network device, where the second signal is a signal transmitted by the network device after a beam failure recovery request signal for a link is received; and determining a transmission configuration indication (TCI) state of a first physical channel and/or a power control parameter based on the second signal, where the first physical channel is a channel corresponding to the link in which the beam failure occurs or a beam failure recovery request signal, the method for processing the message provided by the embodiments of the present application enables the terminal device to determine the link (TRP) of which the serving beam is replaced by the network device, and then timely recovers the transmission of a single link (TRP) in which a beam failure occurs.

In addition, another embodiment of the present application further provides a method for processing a message, which includes the following steps:
step d: transmitting a first signal to a network device; where the first signal is for indicating first index information of a link in which a beam failure occurs;
step e: receiving a second signal transmitted by a network device; where the second signal is a signal transmitted by the network device after receiving a beam failure recovery request signal, that is the first signal, of a terminal device for a link;
step f: determining a transmission configuration indication (TCI) state of a first physical channel and/or a power control parameter based on the second signal; where the first physical channel is a channel corresponding to the link in which the beam failure occurs or a beam failure recovery request signal.

Some detailed descriptions of the present embodiment may be referred to the above two embodiments, which are not repeated in the present embodiment.

The embodiments of the present application provide the method for processing the message, which includes: receiving a second signal transmitted by a network device, where the second signal is a signal transmitted by the network device after a beam failure recovery request signal for a link is received; and determining a transmission configuration indication (TCI) state of a first physical channel and/or a power control parameter based on the second signal, where, the first physical channel is a channel corresponding to the link in which the beam failure occurs or a beam failure recovery request signal, the method for processing the message provided by the embodiments of the present application enables the terminal device to determine the link (TRP) of which the serving beam is replaced by the network device, and then timely recovers the transmission of a single link (TRP) in which a beam failure occurs.

Referring to FIG. 3, which is a flowchart diagram of a method for processing a message applied in a network-side device according to an embodiment of the present application, the method for processing the message includes the following steps.
step 301: a first signal transmitted by a terminal device is received; where the first signal is for indicating first index information of a link in which a beam failure occurs.

According to the method for processing the message provided by the embodiments of the present application, the terminal device transmits the first signal to the network device, and the first signal is for indicating first index information of a link in which a beam failure occurs. Thus, the network device may be informed the link in which a beam failure occurs, which enables the terminal device to determine the link (TRP) of which the serving beam is replaced by the network device, and then timely recovers the transmission of a single link (TRP) in which a beam failure occurs.

Based on the above embodiments, in the present embodiment, the first signal includes any one or more of the following information:
a beam failure detection reference signal (BFD RS) index corresponding to the link in which a beam failure occurs;
a beam failure detection reference signal (BFD RS) set index corresponding to the link in which a beam failure occurs;
a control resource set (CORESET) subset index corresponding to the link in which a beam failure occurs;
a CORESET index corresponding to the link in which a beam failure occurs;
a value of higher layer parameter CORESETPoolIndex of a CORESET, corresponding to the link in which the beam failure occurs; or
a beam failure recovery BFR procedure index corresponding to the link in which a beam failure occurs.

Referring to FIG. 4, which is a flowchart diagram of another message processing method applied in a network-side device according to an embodiment of the present application, the method for processing the message includes the following step:
step 401: a second signal is transmitted to a terminal device, so that the terminal device determines a transmission configuration indication (TCI) state of a first physical channel and/or a power control parameter based on the second signal; where the second signal is a signal transmitted by the network device after a beam failure recovery request signal for a link is received;
where the first physical channel is a channel corresponding to the link in which the beam failure occurs or a beam failure recovery request signal.

The embodiments of the present application provide the method for processing the message, which includes receiving a second signal transmitted by a network device, where the second signal is a signal transmitted by the network device after a beam failure recovery request signal for a link is received; and determining a transmission configuration indication (TCI) state of a first physical channel and/or a power control parameter based on the second signal, where, the first physical channel is a channel corresponding to the link in which the beam failure occurs or a beam failure recovery request signal, the method for processing the message provided by the embodiments of the present application enables the terminal device to determine the link (TRP) of which the serving beam is replaced by the network device, and then timely recovers the transmission of a single link (TRP) in which a beam failure occurs.

Based on the above embodiments, in the present embodiment, transmitting a second signal to a terminal device for determining a transmission configuration indication (TCI) state of a first physical channel and/or a power control parameter based on the second signal includes:
transmitting a second signal to the terminal device, so that the terminal device determines the first physical channel corresponding to the second signal based on an association between a resource carrying the second signal and first index information of the link in which a beam failure occurs, and determines a TCI state of the first physical channel.

Based on the above embodiments, in the present embodiment, the second signal includes at least one of the following:
a resource of the second signal includes one or more of a search space or a control resource set (CORESET); where a resource corresponds to a link;
the second signal is a signal transmitted by one of two or more dedicated search spaces or CORESETs;
the second signal includes an information field for indicating the first index information; or
the second signal is downlink control information (DCI) having a toggled new data indicator (NDI) field and a same hybrid automatic retransmission request (HARQ) process number as a DCI scheduling a physical uplink shared channel (PUSCH) with a beam failure recovery request.

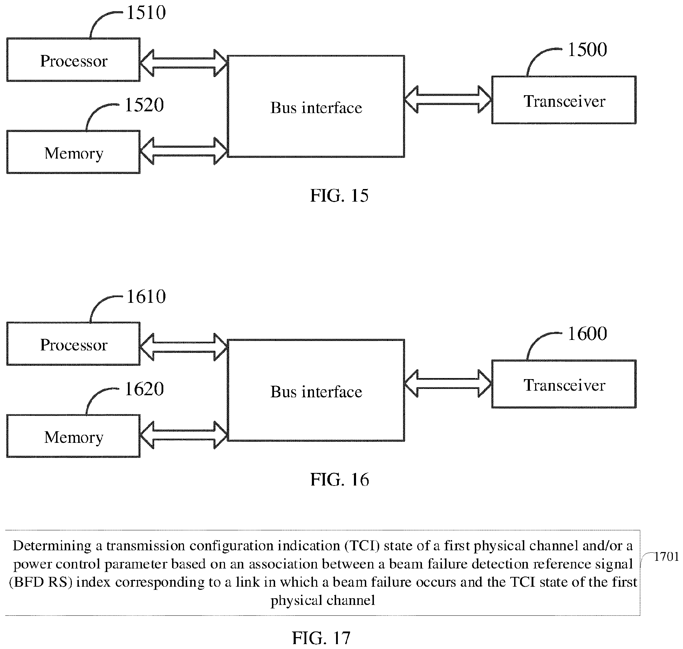

Referring to FIG. 17, it is a flowchart diagram of another message processing method performed by a terminal device according to an embodiment of the present application, the method for processing the message includes the following step:
step 1701: a transmission configuration indication (TCI) state of a first physical channel and/or a power control parameter are determined based on an association between a beam failure detection reference signal (BFD RS) set index corresponding to a link in which a beam failure occurs and the transmission configuration indication (TCI) state of the first physical channel;
where the first physical channel is a channel corresponding to the link in which the beam failure occurs or a beam failure recovery request signal.

In an embodiment, the first physical channel is associated with a value of higher layer parameter of a CORESET used to transmit the first physical channel.

In an embodiment, the first physical channel includes any one or more of the following:
a physical downlink control channel (PDCCH), a physical uplink control channel (PUCCH), a physical uplink shared channel (PUSCH), a physical downlink shared channel (PDSCH), or a physical random access channel (PRACH).

In an embodiment, a transmission configuration indication (TCI) state of a first physical channel and/or a power control parameter includes at least one of the following:
a TCI state or a quasi-colocation (QCL) parameter associated with the beam failure recovery request signal or first index information, or the power control parameter; or
a TCI state or a quasi-colocation (QCL) parameter of a reference signal carried by the beam failure recovery request signal or the power control parameter;
where the first index information is index information of the link in which a beam failure occurs.

The present application is specifically described through specific embodiments as follow.

### Embodiment 1

The network-side device may configure a BFD RS set or a plurality of BFD RSs for each TRP, or the terminal may determine a BFD RS set or a plurality of BFD RSs corresponding to a TRP according to a predefined method. When detecting that all measured values of BFD RS corresponding to a TRP meet a beam failure condition, the terminal will trigger a beam failure recovery report, and request the network device to replace a serving beam (TCI state) for it to recover a normal transmission. That the all measured values of BFD RS corresponding to a TRP meet a beam failure condition may be one or more reference signals in the BFD RS set, or all reference signals in a reference signal set satisfy a certain threshold, such as assuming that a block error rate (BLER) is higher than 10%. All reference signals in the reference signal set satisfy a certain threshold, that is, the measured value of the reference signal set satisfies a certain threshold.

It should be noted that a TRP-related information carried in the beam failure recovery report may be in the following forms.

The TRP-related information may be a BFD RS-related index associated with the TRP, such as a BFD RS set index, a BFD RS index or other forms of group index of the BFD RS.

The TRP-related information may be a CORESET-related index associated with the TRP, such as a CORESET index or a CORESET configuration-related index, such as a value of higher layer parameter CORESETPoolIndex configured under a CORESET, or a CORESET subset index. The CORESET index is a controlResourceSetId (CORESET ID) configured for higher layer parameters. For example, the terminal can determine an association between each TRP and CORESET through a configuration or predefined method on the network-side device, such as a higher layer signaling configuration TRP1 is associated with CORESETs 1, 2, 3, a TRP2 is associated with CORESETs 4, 5. The terminal needs to carry only one index of one CORESET of a plurality of CORESETs associated with one TRP, such as the lowest number CORESET index, the highest number index, or any CORESET index of the plurality of CORESETs. The CORESET subset index is an index of a group or a subset of a CORESET group. After obtaining the CORESET-related index information reported by the terminal, the network-side device can determine which TRP having a beam failure occurs.

The TRP-related information may also be an index of a beam failure recovery (BFR) procedure explicitly configured or determined on the network-side device. The BFR procedure is used by the terminal to determine the number of processes that require a beam failure detection in a cell. Each BFR procedure can correspond to one or more TRPs, a cell, a BFD RS set, a CORESET subset, or one or more CORESET, etc.

In all embodiments of the present application, all description of the TRP may be replaced by the above TRP-related index, including a BFD RS-related index, a CORESET-related index or a BFR procedure index.

In the present application, the beam failure recovery report transmitted by the terminal may also be referred to as a beam failure recovery request or the first signal.

### Embodiment 2

The TRP-related information of the first embodiment may be carried by the following signals or channels:
a MAC CE signaling, a BFD RS related index and a CORESET-related index corresponding to a TRP that can fail in a signaling, or a BFR procedure index corresponding to the TRP or a cell, etc.

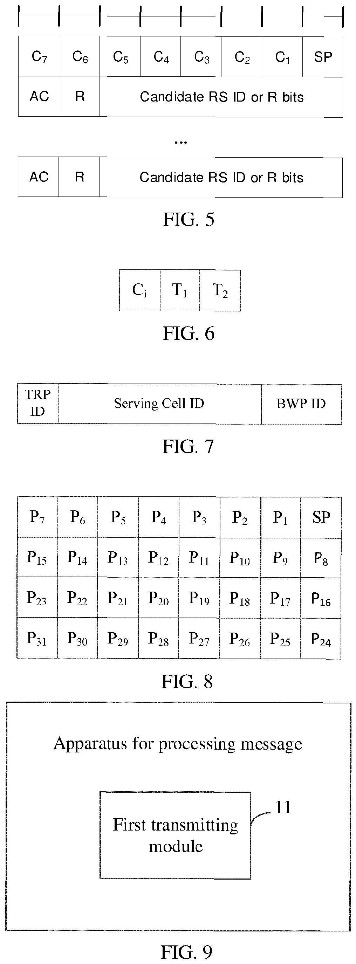

The MAC CE signaling for indicating a beam failure in the present specification is shown in FIG. 5, and it shows a situation that the number of cells that may be used for the beam failure recovery is less than 8, where Ci (i is equal to 1,2,..., 7) correspond to different cells respectively. When Ci is set to 1, it means that a beam failure occurs in the corresponding cell, and when Ci is set to 0, it means that no beam failure occurs. The above situation is similar a situation that the number of cells is greater than 8, and the maximum value of Ci is 31.

If a TRP-related information is added, it is inaccurate to indicate whether a beam failure occurs in a cell through only a bitmap. A way is to add the TRP indication of each cell on the basis of a bitmap indication of each cell, that is, adding P index fields corresponding to P TRPs to each cell. As shown in FIG. 6, taking P is equal to 2 TRPs as an example, the number of P is the same as the number of TRP-related indexes (such as the BFD RS set index, the CORESET subset index and the BFR procedure index of the first embodiment) configured for each cell. When Ci is equal to 0, it means that no failure occurs in transmissions corresponding to all of BFD RS set indexes, BFR procedure indexes, CORESET subset indexes in the cell. When Ci is equal to 1, it means that a failure occurs in one or more the transmissions corresponding to BFD RS set indexes, BFR procedure indexes, CORESET subset indexes in the cell. The transmission in which a failure occurs depends on the bitmap value of Tj. Similarly, when Tj is equal to 1, it means that a failure occurs in the transmission of the corresponding TRP-related physical resources. When Tj is equal to 0, it means that no failure occurs in the transmission of the corresponding TRP-related physical resources. The terminal does not expect Ci is equal to 1, when all the value of associated Tj are 0. Similarly, the terminal does not expect Ci is equal to 0, when all the value of associated Tj have a value is 1.

The MAC CE signaling indication may increase a signaling overhead when both the cell number and TRP number are high. It can also be indicated in other ways, such as indicating the cell and/or TRP in which a failure occurs to the network device through a signaling in FIG. 7 rather than a bitmap. The terminal does not need to indicate all the cells to the network device, but only the cell and/or TRP in which a failure occurs. A TRP ID is the TRP-related index, such as the BFD RS set index, the CORESET subset index, the BFR procedure index of the first embodiment.

In addition to the above indication methods, indication can be performed based on the total number of BFR procedures configured on the network-side device instead of the cell. For example, the network-side device is configured with 16 cells. Some cells contain only one BFR procedure, some cells contain 2 or 3 BFR procedures, and the total number of BFR procedures is 32. Then the BFR procedure may be indicated in the MAC CE signaling through the bitmap as shown in FIG. 8. Similarly, Pt (t is equal to 0,1, ..., 31) is equal to 1 indicates that the corresponding BFR procedure has a transmission failure, and Pt is equal to 0 indicates that the corresponding BFR procedure has no transmission failure.

The TRP-related index information (such as the BFD RS set index, the CORESET subset index, the BFR procedure index of the first embodiment) may be transmitted on the PUCCH through a scheduling request (SR) resource. In the beam failure recovery of the related art, only one SR resource, which is configured by higher layer signaling schedulingRequestID-BFR-SCell-r16, is for indicating a failure event and requests the corresponding uplink transmission resource for further reporting MAC CE signaling. This kind of SR resource has a specific periodicity and offset configuration, and the terminal can report failure events through any one of the SR resources determined by the higher layer signaling schedulingRequestID-BFR-SCell-r16. In order to support the TRP beam failure recovery, the network-side device can configure a plurality of SR resources for the terminal, and different SR resources have different periodicities and offsets.

For example, the network device configures two kinds of SR resources for the terminal, and each SR resource corresponds to a different TRP index. The network device can determine the cell or TRP in which a failure occurs through the SR resources together with the MAC CE signaling transmitted by the terminal. For example, the network-side device determines the cell or TRP in which a failure occurs through the SR resources and the MAC CE signaling when the SR resources carry TRP-related index information and the MAC CE signaling carries cell ID-related information.

SR resources may also be configured to carry some group information, and the MAC CE signaling is configured to carry intra-group information. For example, all BFR procedures are divided into three large groups, and the SR resources carry group number information, and the MAC CE carries intra-group BFR procedure number, such as a signaling form according to FIG. 8. Thus, the overhead of the MAC CE signaling may be reduced. Specific grouping methods of the BFR procedures are not limited in the present embodiment.

Similarly, the TRP-related index information may also be carried in a PRACH transmission. For example, the resources transmitted by a preamble are related to the TRP-related index information of the first embodiment, and the network device may determine TRP in which a failure occurs according to the resources used in the PRACH transmission.

### Embodiment 3

In the related art, each cell is configured with a BFR-related search space to receive a response information of the network-side device after transmitting a beam failure recovery request (BFRQ). When receiving the response information of the network-side device, the terminal believes that the network-side device has received the BFRQ transmitted by the terminal and then replaces the serving beam for the network-side device. In addition, the response transmitted by the network-side device is a DCI signaling with a cyclic redundancy check (CRC) scrambled by a cell-radio network temporary identifier (C-RNTI) or a modulation and coding scheme-cell-radio network temporary identifier (MCS-C-RNTI).

If a cell includes a plurality of TRPs, the beam failure recovery of the TRP or cell receive the response from the network-side device through the search space configured in the related art. Especially when the beam failure occurs at more than one TRP, the response information received by the terminal cannot determine beam failure events occur in which TRP. If the response information transmitted by the network device is misunderstood, that is, for a failed TRP, the terminal believes that the network-side device has replaced the serving beam, and would not report to the BFRQ again, resulting in the TRP beam failure event not being recovered in time. Therefore, it is necessary to modify the response information reception method in related art to support a TRP-level beam failure recovery. In the present application, the response information is also referred to as the second information.

The specific approach may be as follow.

The network device is configured with more than one dedicated search space or CORESET for receiving the response information from the network-side device. Each search space or CORESET is associated with a TRP-related index (such as the BFD RS set index, CORESET subset index, BFR procedure index of the first embodiment). For example, the network device is configured with two search spaces, and the two search spaces are associated with two CORESETs with different values of higher layer parameter CORESETPoolIndex. When the terminal receives the response information in the search space of the CORESET with the CORESETPoolIndex value of 0, it means that a failure occurs in the transmission corresponding to a set of CORESETs, or a CORESET subset with the CORESETPoolIndex value of 0. Similarly, When the terminal receives the response information in the search space of the CORESET with the CORESETPoolIndex value of 1, it means that a failure occurs in the transmission corresponding to a set of CORESETs, or a CORESET subset with the CORESETPoolIndex value of 1. The above examples are only schematic descriptions, and other implementation methods may also be performed. For example, the response information may also be received by a TRP2-related CORESET or a search space when the TRP1 has a beam failure. For example, the response may be received in the CORESET or the search space corresponding to the TRP2-related index when the terminal detects a transmission failure of the TRP1-related index and after transmitting the BFRQ, which increases a transmission correct probability of the response information. The above implementation methods are not limited in the present application. In addition, the dedicated CORESET or search space refers to that the CORESET is not configured with other search spaces in addition to the search space (higher layer parameter recoverySearchSpaceId) configured to receive response, avoiding the terminal misunderstands the response information of the network-side device. If the terminal is configured with two or more CORESET or search space to receive the response information of the network-side device, the terminal may use a corresponding new candidate beam in the corresponding CORESET or search space to receive the response information after several slots elapse from transmission of the BFRQ. The corresponding candidate beam refers to that a new candidate beam of the TRP1 and used by the terminal when receiving the response to the transmission failure of the TRP1, no matter the response information is received in a TRP1-related CORESET or a search space, or a TRP2-related CORESET or a search space. Similarly, the terminal uses the new candidate beam for TRP2 when receiving the response to the transmission failure of TRP2.

The network device may also receive the response information in a non-dedicated CORESET or search space. Similar to the dedicated CORESET or search space mentioned above, two or more CORESET or search spaces are configured to receive the response information relative to two TRPs. It is not repeated here, but the CORESET or search space may also receive other DCI information except the response information. In order to further distinguish the response information from other DCI information, the response information is expected to meet a predetermined time interval with a BFRQ transmission time. For example, the response information received within K slots transmitted by a TRP1-related BFRQ information is the beam failure recovery of the TRP1; and the response information received within K slots transmitted by a TRP2-related BFRQ information is the beam failure recovery of the TRP2, and so on.

In addition, a field may be added to the response information, that is, a DCI signaling, transmitted by a base station to explicitly indicate for which TRP the response information is indicated. For example, an information field includes 1 bit to indicate the CORESET subset index, such as the value of the higher layer parameter CORESETPoolIndex, 0 or 1, or the value of the BFR procedure index, 0 or 1. The information field may also contain 2 bits to indicate the number of more than 2 BFR procedures, such as the supported BFR procedure index up to 3, including 0,1,2,3. The information field may also be more than 2 bits, including CORESET ID or BFD RS set index. The present embodiment does not limit the number of bits and the combination of TRP-related indexes included, that is, each bit width of the information field may be combined with the TRP-related index, such as the BFD RS set index, the CORESET subset index, the BFR procedure index of the first embodiment.

It should be noted that the BFRQ information may be a preamble transmitted by the terminal in the PRACH, a SR sent in the PUCCH, or a MAC CE signaling sent in the PUSCH channel, etc. The received response information, that is, the DCI signaling, may be the DCI signaling with CRC scrambled by the C-RNTI or the MCS-C-RNTI transmitted by the terminal after receiving the BFRQ. The received response information may also be a DCI signaling having a toggled new data indicator (NDI) field and a same hybrid automatic retransmission request (HARQ) process number as a DCI signaling scheduling PUSCH for transmitting MAC CE signaling, which means that the network-side device received the MAC CE signaling transmitted by the terminal.

### Embodiment 4

In the current specification, after 28 symbols of the terminal receives the response from the network-side device, all CORESETs in a cell use a new candidate beam to monitor the PDCCH, and the new candidate beam corresponding to the cell is also used when transmitting PUCCH. After introducing a beam failure recovery mechanism of multiple TRPs, different PDCCHs or PUCCHs may correspond to different TRPs, and it is unreasonable to use the new candidate beam reported by the terminal for all of them. For example, if the beam failure of the TRP1 occurs, the terminal reports the new beam (TCI state) used for a TRP1 transmission. If the new beam is used for both TRP1 and TRP2 transmission, the transmission of the TRP2 would have poor quality or even fail. Therefore, it is necessary to improve a setting or determination method of the physical channel in the related specification to make it suitable for the beam failure recovery in multi-TRP scenarios.

After receiving the response from the network-side device, such as T slots or symbols, the terminal replaces the serving beam for the physical channel associated with the response information with a suitable new candidate beam, and does not replace the serving beam for the physical channel associated with the response information, that is, associations among a response information, a physical channel (including PDCCH, PUCCH, PUSCH, PDSCH, PRACH, etc., which may be taken as the first physical channel) and new candidate beams are introduced. It should be noted that the response information, the physical channel and the new candidate beam are associated and they are associated with a TRP. However, since the TRP is invisible to the terminal, it is necessary to associate the TRP with another parameter, physical resource, or index value, such as the TRP-related index (such as the BFD RS index, BFD RS set index, CORESET subset index, CORESET index, a value of higher layer parameter of a CORESET, BFR procedure index of the first embodiment), or the information carried by the dedicated CORESET or response information of the embodiment 3.

Association between the first physical channel and the response signal (that is, a second signal) is as follow.

If the first physical channel is the PDCCH, the CORESET used for transmitting the first physical channel and the CORESET for receiving the second signal have the same CORESET-related index value, such as the CORESET subset index, the CORESET index, the value of higher layer parameter of a CORESET, and the two CORESETs are associated. After receiving the second signal transmitted by the network-side device, the terminal uses the new candidate beam (a TCI state, or a QCL parameter of reference signal index q_{new}) to monitor the CORESET which has the same CORESET-related index as the CORESET in which the second signal is transmitted.

If the first physical channel is the PUCCH, the CORESET for the transmission of the PDCCH which indicates the resource of PUCCH and the CORESET for reception of the second signal have the same CORESET-related index values such as the CORESET subset index, the CORESET index, the value of higher layer parameter of aCORESET , and the two CORESETs are associated. After receiving the second signal transmitted by the network-side device, the terminal uses the new candidate beam (a TCI state, or a QCL parameter of the reference signal index q_{new}) to transmit the associated first physical channel.

If the first physical channel is the PDSCH/PUSCH, the CORESET for the transmission of PDCCH which schedules PDSCH/PUSCH and the CORESET for reception of the second signal have the same CORESET-related index values such as the CORESET subset index, the CORESET index, the value of higher layer parameter of the CORESET , and the two CORESETs are associated. After receiving the second signal transmitted by the network-side device, the terminal uses the new candidate beam (a TCI state, or a QCL parameter of the reference signal index q_{new}) to receive or transmit the associated first physical channel.

In the present embodiment, it should be noted that the method for determining the new candidate beam (TCI state, or the QCL parameter of the reference signal index q_{new}) is as follow.

The TCI state of the first physical channel may be the TCI state carried in the first signal transmitted by the terminal to the network-side device or the QCL parameter of a first reference signal. When the terminal transmits the first signal, it carries the new candidate beam information (the TCI state or the QCL parameter). After the response signal (the second signal) from the network-side device is received, the TCI state or QCL parameter may be applied to the first physical channel.

It should be noted that in addition, the new candidate beam may be determined based on the association between the new candidate beam and the TRP related index, the first signal or the response signal (the second signal).

For example, when the terminal transmits the first signal to the network-side device, it may carry the TRP-related index (BFD RS index, BFD RS set index, CORESET subset index, CORESET index, a value of higher layer parameter of a CORESET, BFR procedure index, etc.) and new candidate beam information (if it may be detected by the terminal), so the terminal may determine the association between the new candidate beam and the TRP related index.

Associated power control parameters may also be determined for the first channel. The method is similar to determining the TCI state. The first channel is associated with the second signal or the link (the TRP) where a failure occurs. The power control parameters include a path-loss parameter, an open-loop power control parameter, and etc.

Based on the method of the third embodiment, the network-side device may carry the TRP-related index in the response signal (the second signal), such as transmitting a second signal in the TRP-related CORESET or the search space or directly indicating the TRP-related index in the second signal. Alternatively, the terminal may determine the association between the second signal and the first signal (the new candidate beam information carried by the first signal) based on the HARQ process number and/or a NDI value indicated in the second signal. Therefore, after receiving the second signal, the terminal may also determine the association between the second signal and the new candidate beam, and then the associated new candidate beam may be applied to the associated first physical channel. In addition, referring to FIG. 9, it is a block diagram of an apparatus for processing a message applied to a terminal device according to an embodiment of the present application, the apparatus for processing the message includes:
a first transmitting module 11, configured to transmit a first signal to a network device; where the first signal is for indicating first index information of a link in which a beam failure occurs.

It should be noted that the apparatus may perform all the steps of the method for processing the message applied to the terminal device and may have the same effect, which are not repeated in the present application.

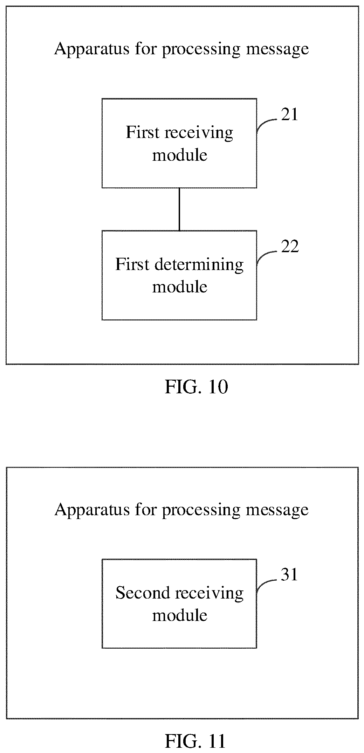

In addition, referring to FIG. 10, which is a block diagram of another apparatus for processing a message applied to a terminal device according to an embodiment of the present application, the apparatus for processing the message includes:
a first receiving module 21, configured to receive a second signal transmitted by a network device; where the second signal is a signal transmitted by the network device after a beam failure recovery request signal for a link is received; and
a first determining module 22, configured to determine a transmission configuration indication (TCI) state of a first physical channel and/or a power control parameter based on the second signal;
where the first physical channel is a channel corresponding to the link in which the beam failure occurs or a beam failure recovery request signal.

It should be noted that the another apparatus may perform all the steps of the method for processing the message applied to the terminal device and may have the same effect, which are not repeated in the present application.

In addition, referring to FIG. 11, it is a block diagram of an apparatus for processing a message applied to a network device according to an embodiment of the present application, the apparatus for processing the message includes:
a second receiving module 31, configured to receive a first signal transmitted by a terminal device; where the first signal is for indicating first index information of a link in which a beam failure occurs.

It should be noted that the apparatus may perform all the steps of the method for processing the message applied to the network device and may have the same effect, which are not repeated in the present application.

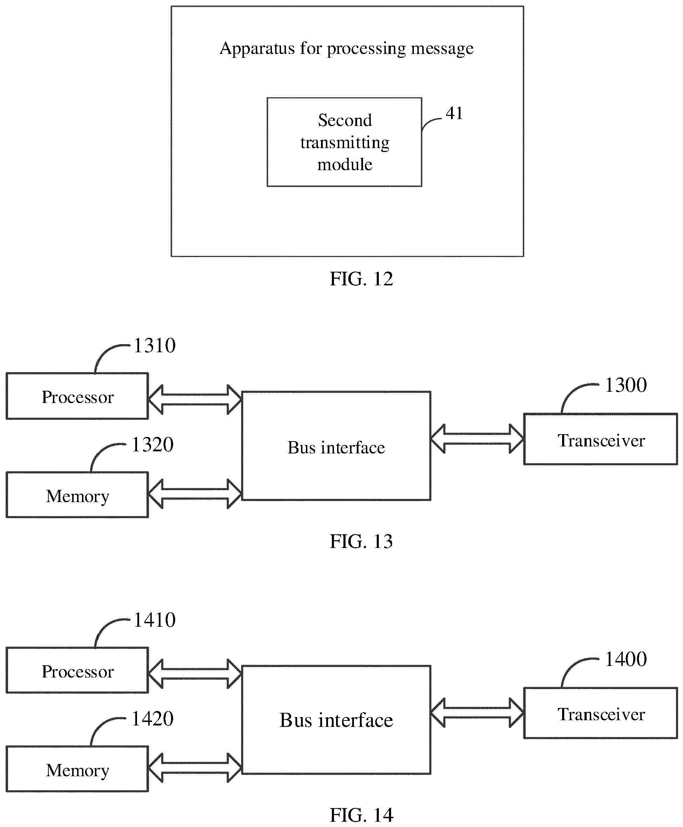

In addition, referring to FIG. 12, which is another block diagram of an apparatus for processing a message applied to a network device according to an embodiment of the present application, the apparatus for processing the message includes:
a second transmitting module 41, configured to transmit a second signal to a terminal device, so that the terminal device determines a transmission configuration indication (TCI) state of a first physical channel and/or a power control parameter based on the second signal; where the second signal is a signal transmitted by the network device after beam failure recovery request signal for a link is received;
where the first physical channel is a channel corresponding to the link in which the beam failure occurs or a beam failure recovery request signal.

It should be noted that the another apparatus may perform all the steps of the method for processing the message applied to the network device and may have the same effect, which are not repeated in the present application.

In addition, referring to FIG. 12, it is a block diagram of another apparatus for processing a message applied to a terminal device according to an embodiment of the present application, the apparatus for processing the message includes:
a second determining module 51, configured to determine a transmission configuration indication (TCI) state of a first physical channel and/or a power control parameter based on an association between a beam failure detection reference signal (BFD RS) set index corresponding to a link in which a beam failure occurs and the transmission configuration indication (TCI) state of the first physical channel;
where the first physical channel is a channel corresponding to the link in which the beam failure occurs or a beam failure recovery request signal.

It should be noted that the apparatus may perform all the steps of the method for processing the message applied to the network device and may have the same effect, which are not repeated in the present application.

FIG. 13 is a structural schematic diagram of a terminal device according to an embodiment of the present application, and the terminal device includes: a memory 1320, a transceiver 1300, and a processor 1310.

In FIG. 13, a bus architecture may include any number of interconnected buses and bridges, which are linked together through various circuits of one or more processors represented by the processor 1310 and one or more memories represented by the memory 1320. The bus architecture can also link together various other circuits, such as peripherals, voltage regulators, and power management circuits, which are well known in the related art, and therefore is not further described in the present application. The bus interface provides an interface. The transceiver 1300 may be a plurality of elements, i.e., including a transmitter and a receiver, units for providing communication with various other devices over transmission media including wireless channels, wired channels, fiber optic cables, and the like. The processor 1310 is responsible for managing the bus architecture and general processing, and the memory 1320 can store data used by the processor 1310 when performing operations.

The processor 1310 may be a central processing unit (CPU), an application specific integrated circuit (ASIC), a field-programmable gate array (FPGA), or a complex programmable logic device (CPLD), the processor can also use a multi-core architecture.

The memory 1320 is configured to store a computer program; the transceiver 1300 is configured to transmit and receive data under the control of the processor; the processor 1310 is configured to read the computer program in the memory and perform the following steps:
transmitting a first signal to a network device; where the first signal is for indicating first index information of a link in which a beam failure occurs.

Based on the above embodiments, in the present application, the first signal includes any one or more of the following information:
a beam failure detection reference signal (BFD RS) index corresponding to the link in which a beam failure occurs;
a beam failure detection reference signal BFD RS set index corresponding to the link in which a beam failure occurs;
a control resource set CORESET subset index corresponding to the link in which a beam failure occurs;
a CORESET index corresponding to the link in which a beam failure occurs;
a value of higher layer parameter CORESETPoolIndex of a CORESET, corresponding to the link in which the beam failure occurs; or
a beam failure recovery BFR procedure index corresponding to the link in which a beam failure occurs.

Based on the above embodiments, in the present embodiment, transmitting a first signal to a network device includes:
transmitting the first signal to the network device through one or more of a higher layer signaling, a media access control layer control element (MAC CE), a scheduling request SR resource, a physical random access channel PRACH.

Based on the above embodiments, in the present embodiment, different links in which a beam failure occurs correspond to different SR resources when the scheduling request SR resource is configured to transmit the first signal.

Based on the above embodiments, in the present embodiment, the different links in which the beam failure occurs correspond to different SR resources when the scheduling request SR resource is configured to transmit the first signal includes:
an SR periodicity and offset indicates first index information when the scheduling request (SR) resource is configured to transmit the first signal.

Based on the above embodiments, in the present embodiment, when using MAC CE to transmit the first signal, the processor 1310 also performs the following steps when executing the computer program: indicating the first index information and/or a cell index through a bitmap or a direct indication:
indicating the BFR procedure index, and not indicating the cell index;
indicating the cell index and at most N BFR procedure indexes in a cell;
indicating the bitmap of a beam failure indication corresponding to all BFD RS sets in the cell; or
indicating the beam failure indication corresponding to one or more BFD RS sets.

Based on the above embodiments, in the present embodiment, a transmission resource of the PRACH carries the first index information, or different transmission resources of the PRACH correspond to different first index information when PRACH is configured to transmit the first signal.

It should be noted that the terminal device may perform all the steps of the method for processing the message applied to the terminal device and may have the same effect, which are not repeated in the present application.

FIG. 14 is a structural schematic diagram of another terminal device according to an embodiment of the present application, and the terminal device includes: a memory 1420, a transceiver 1400, and a processor 1410.

In FIG. 14, a bus architecture may include any number of interconnected buses and bridges, which are linked together through various circuits of one or more processors represented by the processor 1410 and one or more memories represented by the memory 1420. The bus architecture can also link together various other circuits, such as peripherals, voltage regulators, and power management circuits, which are well known in the related art, and therefore is not further described in the present application. The bus interface provides an interface. The transceiver 1400 may be a plurality of elements, i.e., including a transmitter and a receiver, units for providing communication with various other devices over transmission media including wireless channels, wired channels, fiber optic cables, and the like. The processor 1410 is responsible for managing the bus architecture and general processing, and the memory 1420 can store data used by the processor 1410 when performing operations.

The processor 1410 may be a central processing unit (CPU), an application specific integrated circuit (ASIC), a field-programmable gate array (FPGA), or a complex programmable logic device (CPLD), the processor can also use a multi-core architecture.

The memory 1420 is configured to store a computer program; the transceiver 1400 is configured to transmit and receive data under the control of the processor; the processor 1410 is configured to read the computer program in the memory and perform the following steps:
a second signal transmitted by a network device is received; where the second signal is a signal transmitted by the network device after a beam failure recovery request signal for a link is received;
a transmission configuration indication (TCI) state of a first physical channel and/or a power control parameter are determined based on the second signal;
where the first physical channel is a channel corresponding to the link in which the beam failure occurs or a beam failure recovery request signal.

Based on the above embodiments, in the present embodiment, determining a transmission configuration indication state of a first physical channel based on the second signal includes:
determining the first physical channel corresponding to the second signal based on an association between a resource carrying the second signal and first index information of the link in which a beam failure occurs; and
determining the TCI state of the first physical channel.

Based on the above embodiments, in the present embodiment, the second signal includes at least one of the following:
a resource of the second signal includes one or more of a search space or a control resource set CORESET; where a resource corresponds to a link;
the second signal is a signal transmitted by one of two or more special search spaces or CORESETs;
the second signal includes an information field for indicating the first index information; or
the second signal is downlink control information (DCI) having a toggled new data indicator (NDI) field and a same hybrid automatic retransmission request (HARQ) process number as a DCI scheduling a physical uplink shared channel (PUSCH) with a beam failure recovery request.

Based on the above embodiments, in the present embodiment, a CORESET for transmission of a second signal and a CORESET for transmission of a first physical channel have the same higher layer parameter of a CORESET or are associated with the same first index information when the first physical channel is a physical downlink control channel PDCCH;
a CORESET for reception of the second signal and a CORESET on which the PDCCH indicating a first physical channel resource is transmitted have the same higher layer parameter of a CORESET or are associated with the same first index information when the first physical channel is a physical uplink control channel PUCCH;
a CORESET for reception of the second signal and a first physical channel resource are associated with the same first index information when the first physical channel is the physical uplink control channel PUCCH; or.
a CORESET for reception of the second signal and a CORESET on which the PDCCH scheduling the first physical channel is transmitted have the same higher layer parameter of a CORESET or are associated with the same first index information when the first physical channel is a physical uplink shared channel PUSCH or a physical downlink shared channel PDSCH.

Based on the above embodiments, in the present embodiment, the network device configures an association between the first index information and at least one of the following information:
the first physical channel;
the first physical channel resource;
the CORESET; or
a TCI state or a quasi-colocation (QCL) parameter.

Based on the above embodiments, in the present embodiment, the transmission configuration indication (TCI) state of the first physical channel and/or the power control parameter includes at least one of the following:
a TCI state or a quasi-colocation (QCL) parameter associated with the beam failure recovery request signal or the second signal or the first index information, or the power control parameter; or
a TCI state or a quasi-colocation (QCL) parameter of a reference signal carried by the beam failure recovery request signal or the power control parameter.

It should be noted that the terminal device may perform all the steps of the method for processing the message applied to the terminal device and may have the same effect, which are not repeated in the present application.

FIG. 15 is a structural schematic diagram of a network device according to an embodiment of the present application, and the terminal device includes: a memory 1520, a transceiver 1500, and a processor 1510.

In FIG. 15, a bus architecture may include any number of interconnected buses and bridges, which are linked together through various circuits of one or more processors represented by the processor 1510 and one or more memories represented by the memory 1520. The bus architecture can also link together various other circuits, such as peripherals, voltage regulators, and power management circuits, which are well known in the related art, and therefore is not further described in the present application. The bus interface provides an interface. The transceiver 1500 may be a plurality of elements, i.e., including a transmitter and a receiver, units for providing communication with various other devices over transmission media including wireless channels, wired channels, fiber optic cables, and the like. The processor 1510 is responsible for managing the bus architecture and general processing, and the memory 1520 can store data used by the processor 1510 when performing operations.

The processor 1510 may be a central processing unit (CPU), an application specific integrated circuit (ASIC), a field-programmable gate array (FPGA), or a complex programmable logic device (CPLD), the processor can also use a multi-core architecture.

The memory 1520 is configured to store a computer program; the transceiver 1500 is configured to transmit and receive data under the control of the processor; the processor 1510 is configured to read the computer program in the memory and perform the following steps:
a first signal transmitted by a terminal device is received; where the first signal is for indicating first index information of a link in which a beam failure occurs.

Based on the above embodiments, in the present embodiment, the first signal includes any one or more of the following information:
a beam failure detection reference signal (BFD RS) index corresponding to the link in which a beam failure occurs;
a beam failure detection reference signal (BFD RS) set index corresponding to the link in which a beam failure occurs;
a control resource set (CORESET) subset index corresponding to the link in which a beam failure occurs;
a CORESET index corresponding to the link in which a beam failure occurs;
a value of higher layer parameter CORESETPoolIndex of a CORESET, corresponding to the link in which the beam failure occurs; or
a beam failure recovery BFR procedure index corresponding to the link in which a beam failure occurs.

It should be noted that the network device may perform all the steps of the method for processing the message applied to the terminal device and may have the same effect, which are not repeated in the present application.

FIG. 16 is a structural schematic diagram of another network device according to an embodiment of the present application, and the terminal device includes: a memory 1620, a transceiver 1600, and a processor 1610.

In FIG. 16, a bus architecture may include any number of interconnected buses and bridges, which are linked together through various circuits of one or more processors represented by the processor 1610 and one or more memories represented by the memory 1620. The bus architecture can also link together various other circuits, such as peripherals, voltage regulators, and power management circuits, which are well known in the related art, and therefore is not further described in the present application. The bus interface provides an interface. The transceiver 1600 may be a plurality of elements, i.e., including a transmitter and a receiver, units for providing communication with various other devices over transmission media including wireless channels, wired channels, fiber optic cables, and the like. The processor 1610 is responsible for managing the bus architecture and general processing, and the memory 1620 can store data used by the processor 1610 when performing operations.

The processor 1610 may be a central processing unit (CPU), an application specific integrated circuit (ASIC), a field-programmable gate array (FPGA), or a complex programmable logic device (CPLD), the processor can also use a multi-core architecture.

The memory 1620 is configured to store a computer program; the transceiver 1600 is configured to transmit and receive data under the control of the processor; the processor 1610 is configured to read the computer program in the memory and perform the following steps:
a second signal is transmitted to a terminal device, so that the terminal device determines a transmission configuration indication (TCI) state of a first physical channel and/or a power control parameter based on the second signal; where the second signal is a signal transmitted by the network device after a beam failure recovery request signal for a link is received;
where the first physical channel is a channel corresponding to the link in which the beam failure occurs or a beam failure recovery request signal.

Based on the above embodiments, in the present embodiment, transmitting a second signal to a terminal device for determining a transmission configuration indication (TCI) state of a first physical channel and/or a power control parameter based on the second signal includes:
transmitting a second signal to the terminal device, so that the terminal device determines the first physical channel corresponding to the second signal based on an association between a resource carrying the second signal and first index information of the link in which a beam failure occurs, and determines a TCI state of the first physical channel.

Based on the above embodiments, in the present embodiment, the second signal includes at least one of the following:
a resource of the second signal includes one or more of a search space or a control resource set (CORESET); where, a resource corresponds to a link;
the second signal is a signal transmitted by one of two or more special search spaces or CORESETs;
the second signal includes an information field for indicating the first index information; or
the second signal is downlink control information (DCI) having a toggled new data indicator (NDI) field and a same hybrid automatic retransmission request (HARQ) process number as a DCI scheduling a physical uplink shared channel (PUSCH) with a beam failure recovery request.

It should be noted that the network device may perform all the steps of the method for processing the message applied to the terminal device and may have the same effect, which are not repeated in the present application.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a computer readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that can store program codes such as U disk, mobile hard disk, read-only memory (ROM), random access memory (RAM), magnetic disk, or a compact disk.

It should be noted here that the above-mentioned apparatus according to the embodiments of the present application can implement all the method steps implemented by the above-mentioned method embodiments, and can achieve the same effect. The same parts and beneficial effects as the same method embodiments are not repeated here.

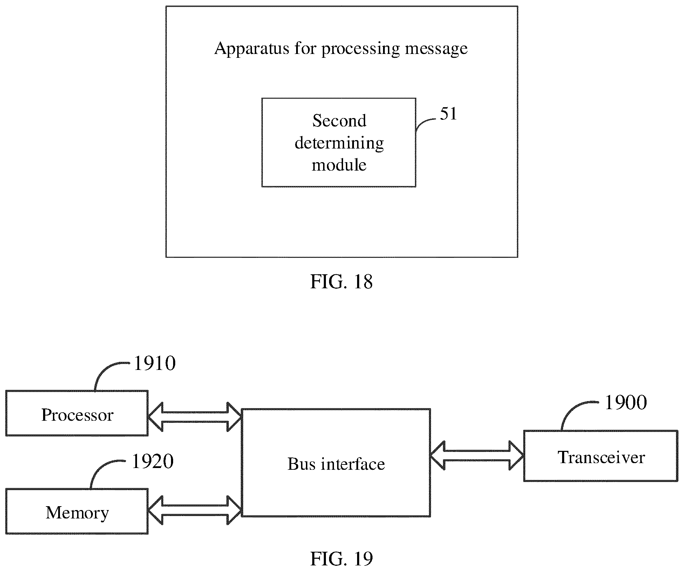

FIG. 19 is a structural schematic diagram of another terminal device according to an embodiment of the present application, and the terminal device includes: a memory 1920, a transceiver 1900, and a processor 1910.

In FIG. 19, a bus architecture may include any number of interconnected buses and bridges, which are linked together through various circuits of one or more processors represented by the processor 1910 and one or more memories represented by the memory 1920. The bus architecture can also link together various other circuits, such as peripherals, voltage regulators, and power management circuits, which are well known in the related art, and therefore is not further described in the present application. The bus interface provides an interface. The transceiver 1900 may be a plurality of elements, i.e., including a transmitter and a receiver, units for providing communication with various other devices over transmission media including wireless channels, wired channels, fiber optic cables, and the like. The processor 1910 is responsible for managing the bus architecture and general processing, and the memory 1920 can store data used by the processor 1910 when performing operations.

The processor 1910 may be a central processing unit (CPU), an application specific integrated circuit (ASIC), a field-programmable gate array (FPGA), or a complex programmable logic device (CPLD), the processor can also use a multi-core architecture.

The memory 1920 is configured to store a computer program; the transceiver 1900 is configured to transmit and receive data under the control of the processor; the processor 1910 is configured to read the computer program in the memory and perform the following steps:
a transmission configuration indication (TCI) state of a first physical channel and/or a power control parameter are determined based on an association between a beam failure detection reference signal (BFD RS) index corresponding to a link in which a beam failure occurs and the transmission configuration indication (TCI) state of the first physical channel;
where the first physical channel is a channel corresponding to the link in which the beam failure occurs or a beam failure recovery request signal.

In an embodiment, the first physical channel is associated with a value of higher layer parameter of a CORESET used to transmit the first physical channel.

In an embodiment, the first physical channel includes any one or more of the following: a PDCCH, a PUCCH, a PUSCH, a PDSCH, or a PRACH.

In an embodiment, a transmission configuration indication (TCI) state of a first physical channel and/or a power control parameter includes at least one of the following:
a TCI state or a quasi-colocation (QCL) parameter associated with the beam failure recovery request signal or first index information, or the power control parameter; or
a TCI state or a quasi-colocation (QCL) parameter of a reference signal carried by the beam failure recovery request signal or the power control parameter;
where the first index information is index information of the link in which a beam failure occurs.

It should be noted that the terminal device may perform all the steps of the method for processing the message applied to the terminal device and may have the same effect, which are not repeated in the present application.

An embodiment of the present application further provides a processor readable storage medium having computer program stored therein is provided, where the computer program, when executed by the processor, causes a processor to perform the steps of the method for processing the message mentioned above.

The processor readable storage medium may be any available medium or data storage device that may be accessed by the processor, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

From the foregoing embodiments that a processor readable storage medium stores a computer program, and the computer program is configured to cause the processor to perform the methods described in the foregoing embodiments.

As can be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means can perform the functions specified in one or more flows of the flowchart and/or one or more blocks of the block diagram.

These processor-executable instructions can also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It is apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for processing a message, comprising:
transmitting a first signal to a network device; wherein the first signal is for indicating first index information of a link in which a beam failure occurs.

2. The method of claim 1, wherein the first signal comprises any one or more of the following information:
a beam failure detection reference signal, BFD RS, index corresponding to the link in which the beam failure occurs;
a beam failure detection reference signal, BFD RS, set index corresponding to the link in which the beam failure occurs;
a control resource set, CORESET, subset index corresponding to the link in which the beam failure occurs;
a CORESET index corresponding to the link in which the beam failure occurs;
a value of higher layer parameter CORESETPoolIndex of a CORESET, corresponding to the link in which the beam failure occurs; or
a beam failure recovery, BFR, procedure index corresponding to the link in which the beam failure occurs.

3. The method of claim 1, wherein the transmitting the first signal to the network device comprises:
transmitting the first signal to the network device through one or more of a higher layer signaling, a media access control layer control element, MAC CE, a scheduling request, SR, resource, or a physical random access channel, PRACH.

4. The method of claim 3, wherein different links in which the beam failure occurs correspond to different SR resources in case that the first signal is transmitted through the SR resource.

5. The method of claim 4, wherein the different links in which the beam failure occurs correspond to different SR resources in case that the first signal is transmitted through the scheduling request, SR, resource, comprises:
an SR periodicity and offset indicates first index information in case that the first signal is transmitted through the SR resource.

6. The method of claim 3, wherein in case that the first signal is transmitted through the MAC CE, the method further comprises at least one of:
indicating the first index information and/or a cell index through bitmap or a direct indication;
indicating the BFR procedure index, and not indicating the cell index;
indicating the cell index and up to n BFR procedure indexes in a cell;
indicating the bitmap of beam failure indication corresponding to all BFD RS sets in the cell; or
indicating the beam failure indication corresponding to one or more BFD RS sets.

7. The method of claim 3, wherein a transmission resource of the PRACH carries the first index information, or different transmission resources of the PRACH correspond to different first index information in case that the first signal is transmitted through the PRACH.

8. A method for processing a message, comprising:
receiving a second signal transmitted by a network device; wherein the second signal is a signal transmitted by the network device after a beam failure recovery request signal for a link is received; and
determining a transmission configuration indication, TCI, state of a first physical channel and/or a power control parameter based on the second signal;
wherein the first physical channel is a channel corresponding to the link in which the beam failure occurs or a beam failure recovery request signal.

9. The method of claim 8, wherein the determining the transmission configuration indication state of the first physical channel based on the second signal comprises:
determining the first physical channel corresponding to the second signal based on an association between a resource carrying the second signal and first index information of the link in which the beam failure occurs; and
determining the TCI state of the first physical channel.

10. The method of claim 9, wherein the second signal meets at least one of:
a resource for the second signal comprises one or more of a search space or a control resource set, CORESET; wherein a resource corresponds to a link;
the second signal is a signal transmitted by one of two or more dedicated search spaces or CORESETs;
the second signal includes an information field for indicating the first index information; or
the second signal is downlink control information, DCI, having a toggled new data indicator, NDI, field and a same hybrid automatic retransmission request, HARQ, process number as a DCI scheduling a physical uplink shared channel, PUSCH, with a beam failure recovery request.

11. The method of claim 8, wherein in case that the first physical channel is a physical downlink control channel, PDCCH, a CORESET for transmission of a second signal and a CORESET for transmission of a first physical channel have the same higher layer parameter of a CORESET or are associated with the same first index information;
in case that the first physical channel is a physical uplink control channel, PUCCH, a CORESET for reception of the second signal and a CORESET on which the PDCCH indicating a first physical channel resource is transmitted have the same higher layer parameter of a CORESET or are associated with the same first index information;
in case that the first physical channel is the physical uplink control channel, PUCCH, a CORESET for reception of the second signal and a first physical channel resource are associated with the same first index information; or
in case that the first physical channel is a physical uplink shared channel, PUSCH, or a physical downlink shared channel, PDSCH, a CORESET for reception of the second signal and a CORESET on which the PDCCH scheduling the first physical channel is transmitted have the same higher layer parameter of a CORESET or are associated with the same first index information.

12. The method of claim 9, wherein the network device configures an association between the first index information and at least one of the following information:
the first physical channel;
the first physical channel resource;
the CORESET; or
a TCI state or a quasi-colocation, QCL, parameter.

13. The method of claim 9, wherein the transmission configuration indication, TCI, state of the first physical channel and/or the power control parameter includes at least one of the following:
a TCI state or a quasi-colocation, QCL, parameter associated with the beam failure recovery request signal or the second signal or the first index information, or the power control parameter; or
a TCI state or a quasi-colocation, QCL, parameter of a reference signal carried by the beam failure recovery request signal or the power control parameter.

14. A method for processing a message, comprising:
receiving a first signal transmitted by a terminal device; wherein the first signal is for indicating first index information of a link in which a beam failure occurs.

15. The method of claim 14, wherein the first signal comprises any one or more of the following information:
a beam failure detection reference signal, BFD RS, index corresponding to the link in which the beam failure occurs;
a beam failure detection reference signal, BFD RS, set index corresponding to the link in which the beam failure occurs;
a control resource set, CORESET, subset index corresponding to the link in which the beam failure occurs;
a CORESET index corresponding to the link in which the beam failure occurs;
a value of higher layer parameter CORESETPoolIndex of a CORESET, corresponding to the link in which the beam failure occurs; or
a beam failure recovery, BFR, procedure index corresponding to the link in which the beam failure occurs.

16. A method for processing a message, comprising:
transmitting a second signal to a terminal device, for determining a transmission configuration indication, TCI, state of a first physical channel and/or a power control parameter based on the second signal; wherein the second signal is a signal transmitted by the network device after a beam failure recovery request signal for a link is received;
wherein the first physical channel is a channel corresponding to the link in which the beam failure occurs or a beam failure recovery request signal.

17. The method of claim 16, wherein the transmitting the second signal to the terminal device so that the terminal device determines the transmission configuration indication, TCI, state of the first physical channel and/or the power control parameter based on the second signal comprises:
transmitting a second signal to the terminal device, so that the terminal device determines the first physical channel corresponding to the second signal based on an association between a resource carrying the second signal and first index information of the link in which the beam failure occurs, and determines a TCI state of the first physical channel.

18. The method of claim 17, wherein
a resource for the second signal comprises one or more of a search space or a control resource set, CORESET; wherein a resource corresponds to a link;
the second signal is a signal transmitted by one of two or more dedicated search spaces or CORESETs;
the second signal includes an information field for indicating the first index information; or
the second signal is downlink control information, DCI, having a toggled new data indicator, NDI, field and a same hybrid automatic retransmission request, HARQ, process number as a DCI scheduling a physical uplink shared channel, PUSCH, with a beam failure recovery request.

19. A method for processing a message, comprising:
determining a transmission configuration indication, TCI, state of a first physical channel and/or a power control parameter based on an association between a beam failure detection reference signal, BFD RS, set index corresponding to a link in which a beam failure occurs and the transmission configuration indication, TCI, state of the first physical channel;
wherein the first physical channel is a channel corresponding to the link in which the beam failure occurs or a beam failure recovery request signal.

20. The method of claim 19, wherein the first physical channel is associated with a value of higher layer parameter of a CORESET used to transmit the first physical channel.

21. The method of claim 19 or 20, wherein the first physical channel comprises any one or more of the following:
a physical downlink control channel, PDCCH, a physical uplink control channel, PUCCH, a physical uplink shared channel, PUSCH, a physical downlink shared channel, PDSCH, or a physical random access channel, PRACH.

22. The method of any one of claims 19 to 21, wherein a transmission configuration indication, TCI, state of a first physical channel and/or a power control parameter includes at least one of the following:
a TCI state or a quasi-colocation, QCL, parameter associated with the beam failure recovery request signal or first index information, or the power control parameter; or
a TCI state or a quasi-colocation, QCL, parameter of a reference signal carried by the beam failure recovery request signal or the power control parameter;
wherein the first index information is index information of the link in which a beam failure occurs.

23. An apparatus for processing a message, comprising:
a first transmitting module, configured to transmit a first signal to a network device; wherein the first signal is for indicating first index information of a link in which a beam failure occurs.

24. An apparatus for processing a message, comprising:
a first receiving module, configured to receive a second signal transmitted by a network device; wherein the second signal is a signal transmitted by the network device after a beam failure recovery request signal for a link is received; and
a first determining module, configured to determine a transmission configuration indication, TCI, state of a first physical channel and/or a power control parameter based on the second signal;
wherein the first physical channel is a channel corresponding to the link in which the beam failure occurs or a beam failure recovery request signal.

25. An apparatus for processing a message, comprising:
a second receiving module, configured to receive a first signal transmitted by a terminal device; wherein the first signal is for indicating first index information of a link in which a beam failure occurs.

26. An apparatus for processing a message, comprising:
a second transmitting module, configured to transmit a second signal to a terminal device, so that the terminal device determines a transmission configuration indication, TCI, state of a first physical channel and/or a power control parameter based on the second signal; wherein the second signal is a signal transmitted by the network device after a beam failure recovery request signal for a link is received;
wherein the first physical channel is a channel corresponding to the link in which the beam failure occurs or a beam failure recovery request signal.

27. An apparatus for processing a message, comprising:
a second determining module, configured to determine a transmission configuration indication, TCI, state of a first physical channel and/or a power control parameter based on an association between a beam failure detection reference signal, BFD RS, set index corresponding to a link in which a beam failure occurs and the transmission configuration indication, TCI, state of the first physical channel;
wherein the first physical channel is a channel corresponding to the link in which the beam failure occurs or a beam failure recovery request signal.

28. A terminal device, comprising:
a processor; and
a memory storing a computer program that is executable by the processor, wherein the computer program, when executed by the processor, causes the terminal device to perform the following step:
transmitting a first signal to a network device; wherein the first signal is for indicating first index information of a link in which a beam failure occurs.

29. The terminal device of claim 28, wherein the first signal comprises any one or more of the following information:
a beam failure detection reference signal, BFD RS, index corresponding to the link in which the beam failure occurs;
a beam failure detection reference signal, BFD RS, set index corresponding to the link in which the beam failure occurs;
a control resource set, CORESET, subset index corresponding to the link in which the beam failure occurs;
a CORESET index corresponding to the link in which the beam failure occurs;
a value of higher layer parameter CORESETPoolIndex of a CORESET, corresponding to the link in which the beam failure occurs; or
a beam failure recovery, BFR, procedure index corresponding to the link in which the beam failure occurs.

30. The terminal device of claim 28, wherein the transmitting the first signal to the network device comprises:
transmitting the first signal to the network device through one or more of a higher layer signaling, a media access control layer control element, MAC CE, a scheduling request, SR, resource, or a physical random access channel, PRACH.

31. The terminal device of claim 30, wherein different links in which the beam failure occurs correspond to different SR resources in case that the first signal is transmitted through the SR resource.

32. The terminal device of claim 31, wherein the different links in which the beam failure occurs correspond to different SR resources in case that the first signal is transmitted through the scheduling request, SR, resource, comprises:
an SR periodicity and offset indicates first index information in case that the first signal is transmitted through the SR resource.

33. The terminal device of claim 30, wherein in case that the first signal is transmitted through the MAC CE, the computer program, when executed by the processor, causes the terminal device to further perform the following steps:
indicating the first index information and/or a cell index through bitmap or a direct indication;
indicating the BFR procedure index, and not indicating the cell index;
indicating the cell index and up to n BFR procedure indexes in a cell;
indicating the bitmap of beam failure indication corresponding to all BFD RS sets in the cell; or
indicating the beam failure indication corresponding to one or more BFD RS sets.

34. The terminal device of claim 30, wherein a transmission resource of the PRACH carries the first index information, or different transmission resources of the PRACH correspond to different first index information in case that the first signal is transmitted through the PRACH.

35. A terminal device, comprising:
a processor; and
a memory storing a computer program that is executable by the processor, wherein the computer program, when executed by the processor, causes the terminal device to perform the following steps:
receiving a second signal transmitted by a network device; wherein the second signal is a signal transmitted by the network device after a beam failure recovery request signal for a link is received; and
determining a transmission configuration indication, TCI, state of a first physical channel and/or a power control parameter based on the second signal;
wherein the first physical channel is a channel corresponding to the link in which the beam failure occurs or a beam failure recovery request signal.

36. The terminal device of claim 35, wherein the determining the transmission configuration indication state of the first physical channel based on the second signal comprises:
determining the first physical channel corresponding to the second signal based on an association between a resource carrying the second signal and first index information of the link in which the beam failure occurs; and
determining the TCI state of the first physical channel.

37. The terminal device of claim 36, wherein
a resource for the second signal comprises one or more of a search space or a control resource set, CORESET; wherein a resource corresponds to a link;
the second signal is a signal transmitted by one of two or more dedicated search spaces or CORESETs;
the second signal includes an information field for indicating the first index information; or
the second signal is downlink control information, DCI, having a toggled new data indicator, NDI, field and a same hybrid automatic retransmission request, HARQ, process number as a DCI scheduling a physical uplink shared channel, PUSCH, with a beam failure recovery request.

38. The terminal device of claim 35, wherein in case that the first physical channel is a physical downlink control channel, PDCCH, a CORESET for transmission of a second signal and a CORESET for transmission of a first physical channel have the same higher layer parameter of a CORESET or are associated with the same first index information;
in case that the first physical channel is a physical uplink control channel, PUCCH, a CORESET for reception of the second signal and a CORESET on which the PDCCH indicating a first physical channel resource is transmitted have the same higher layer parameter of a CORESET or are associated with the same first index information;
in case that the first physical channel is the physical uplink control channel, PUCCH, a CORESET for reception of the second signal and a first physical channel resource are associated with the same first index information; or
in case that the first physical channel is a physical uplink shared channel, PUSCH, or a physical downlink shared channel, PDSCH, a CORESET for reception of the second signal and a CORESET on which the PDCCH scheduling the first physical channel is transmitted have the same higher layer parameter of a CORESET or are associated with the same first index information.

39. The terminal device of claim 36, wherein the network device configures an association between the first index information and at least one of the following information:
the first physical channel;
the first physical channel resource;
the CORESET; or
a TCI state or a quasi-colocation, QCL, parameter.

40. The terminal device of claim 36, wherein the transmission configuration indication, TCI, state of the first physical channel and/or the power control parameter includes at least one of the following:
a TCI state or a quasi-colocation, QCL, parameter associated with the beam failure recovery request signal or the second signal or the first index information, or the power control parameter; or
a TCI state or a quasi-colocation, QCL, parameter of a reference signal carried by the beam failure recovery request signal or the power control parameter.

41. A network device, comprising:
a processor; and
a memory storing a computer program that is executable by the processor, wherein the computer program, when executed by the processor, causes the terminal device to perform the following step:
receiving a first signal transmitted by a terminal device; wherein the first signal is for indicating a first index information of a link in which a beam failure occurs.

42. The network device of claim 41, wherein the first signal comprises any one or more of the following information:
a beam failure detection reference signal, BFD RS, index corresponding to the link in which the beam failure occurs;
a beam failure detection reference signal, BFD RS, set index corresponding to the link in which the beam failure occurs;
a control resource set, CORESET, subset index corresponding to the link in which the beam failure occurs;
a CORESET index corresponding to the link in which the beam failure occurs;
a value of higher layer parameter CORESETPoolIndex of a CORESET, corresponding to the link in which the beam failure occurs; or
a beam failure recovery, BFR, procedure index corresponding to the link in which the beam failure occurs.

43. A network device, comprising:
a processor; and
a memory storing a computer program that is executable by the processor, wherein the computer program, when executed by the processor, causes the network device to perform the following step:
transmitting a second signal to a terminal device, for determining a transmission configuration indication, TCI, state of a first physical channel and/or a power control parameter based on the second signal; wherein the second signal is a signal transmitted by the network device after a beam failure recovery request signal for a link is received;
wherein the first physical channel is a channel corresponding to the link in which the beam failure occurs or a beam failure recovery request signal.

44. The network device of claim 43, wherein the transmitting the second signal to the terminal device to cause the terminal device to determine the transmission configuration indication, TCI, state of the first physical channel and/or the power control parameter based on the second signal comprises:
transmitting a second signal to the terminal device to cause the terminal device to determine the first physical channel corresponding to the second signal based on an association between a resource carrying the second signal and the first index information of the link in which the beam failure occurs, and determines a transmission configuration indication state for the first physical channel.

45. The network device of claim 44, wherein
a resource of the second signal comprises one or more of a search space or a control resource set, CORESET; wherein a resource corresponds to a link;
the second signal is a signal transmitted by one of two or more dedicated search spaces or CORESETs;
the second signal includes an information field for indicating the first index information; or the second signal is downlink control information, DCI, having a toggled new data indicator, NDI, field and a same hybrid automatic retransmission request, HARQ, process number as a DCI scheduling a physical uplink shared channel, PUSCH, with a beam failure recovery request.

46. A terminal device, comprising:
a processor; and
a memory storing a computer program that is executable by the processor, wherein the computer program, when executed by the processor, causes the terminal device to perform the following step:
determining a transmission configuration indication, TCI, state of a first physical channel and/or a power control parameter based on an association between a beam failure detection reference signal, BFD RS, index corresponding to a link in which a beam failure occurs and the transmission configuration indication, TCI, state of the first physical channel;
wherein the first physical channel is a channel corresponding to the link in which the beam failure occurs or a beam failure recovery request signal.

47. The terminal device of claim 46, wherein the first physical channel is associated with a value of higher layer parameter of a CORESET used to transmit the first physical channel.

48. The terminal device of claim 46 or 47, wherein the first physical channel comprises any one or more of the following:
a PDCCH, a PUCCH, a PUSCH, a PDSCH, or a PRACH.

49. The terminal device of any one claims 46 to 48, wherein a transmission configuration indication, TCI, state of a first physical channel and/or a power control parameter based on the second signal includes at least one of the following:
a TCI state or a quasi-colocation, QCL, parameter associated with the beam failure recovery request signal or first index information, or the power control parameter; or
a TCI state or a quasi-colocation, QCL, parameter of a reference signal carried by the beam failure recovery request signal or the power control parameter;
wherein the first index information is index information of the link in which a beam failure occurs.

50. A non-transient computer readable storage medium having computer program stored therein, wherein the computer program, when executed by the processor, causes a processor to perform the method of any one of claims 1 to 7, or perform the method of any one of claims 8 to 13, or perform the method of any one of claims 14 to 15, or perform the method of any one of claims 16 to 18, or perform the method of any one of claims 19 to 22.
